(19) Europäisches Patentamt
European Patent Office
Office européen des brevets

(11) **EP 3 960 448 A1**

(12) **EUROPEAN PATENT APPLICATION**
published in accordance with Art. 153(4) EPC

(43) Date of publication:
**02.03.2022 Bulletin 2022/09**

(21) Application number: **20795342.3**

(22) Date of filing: **24.04.2020**

(51) International Patent Classification (IPC):
***B32B 27/18*** *(2006.01)* ***B32B 27/30*** *(2006.01)*
***B65D 65/40*** *(2006.01)* ***C08F 8/14*** *(2006.01)*
***C08F 8/30*** *(2006.01)* ***C08F 16/06*** *(2006.01)*
***C08F 299/00*** *(2006.01)* ***C09D 5/16*** *(2006.01)*
***C08L 29/04*** *(2006.01)* ***C09D 129/04*** *(2006.01)*
***C09K 3/00*** *(2006.01)* ***C08K 3/34*** *(2006.01)*
***C08J 7/04*** *(2020.01)*

(52) Cooperative Patent Classification (CPC):
**B32B 27/18; B32B 27/30; B65D 65/40; C08F 8/14; C08F 8/30; C08F 16/06; C08F 299/00; C08J 7/04; C08K 3/34; C08L 29/04; C09D 5/16; C09D 129/04; C09K 3/00**

(86) International application number:
**PCT/JP2020/017584**

(87) International publication number:
**WO 2020/218459 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.04.2019 JP 2019084760**
**25.04.2019 JP 2019084761**
**17.05.2019 JP 2019093295**
**21.06.2019 JP 2019115894**

(71) Applicant: **Kuraray Co., Ltd.**
**Kurashiki-shi, Okayama 710-0801 (JP)**

(72) Inventors:
- **TACHIBANA, Yuki**
**Kurashiki-shi, Okayama 710-0801 (JP)**
- **AMANO, Yusuke**
**Kurashiki-shi, Okayama 710-0801 (JP)**
- **MAEKAWA, Kazuhiko**
**Kurashiki-shi, Okayama 710-0801 (JP)**

(74) Representative: **Müller-Boré & Partner Patentanwälte PartG mbB**
**Friedenheimer Brücke 21**
**80639 München (DE)**

# (54) COATING COMPOSITION AND ANTI-FOG MEMBER, ANTI-FOULING MEMBER, LAMINATE AND ANTI-BACTERIAL PRODUCT USING SAME

(57) A coating composition according to the present invention contains a modified polyvinyl alcohol resin (A) having an ethylene unsaturated group in a side chain thereof. Examples of the modified polyvinyl alcohol resin (A) include those including a structural unit represented by Formula (II) or (III) below. Substrates in various technical fields such as the resin molding field, automobile/railway/aircraft/ships-related field, medical product field, food field, agriculture/gardening field, electrical field, and construction field can be coated with a coating composition according to the present invention.

[FIG.1]

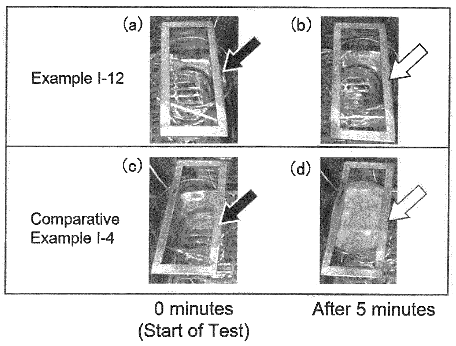


EP 3 960 448 A1

## Description

### Technical Field

The present invention relates to a coating composition, and an anti-fog member, an anti-fouling member, a laminate, and an anti-bacterial product using the same.

### Background Art

In recent years, in order to achieve various purposes and solve problems, a predetermined substrate or matrix is coated using a synthetic resin such as a polyvinyl alcohol resin.

Polyvinyl alcohol resin has better strength properties and film-forming properties, compared to other water-soluble synthetic macromolecules. Accordingly, taking advantage of these properties, polyvinyl alcohol resin is widely used as an anti-fog agent, which is to be applied to the surface of a glass substrate, a metal substrate, a polymer film substrate, or the like, and Patent Document 1 discloses a silyl group-modified polyvinyl alcohol resin in which a silyl group is introduced into the side chain thereof, and an anti-fog agent in which this polyvinyl alcohol resin is used, for example.

Here, it is desired that such a coating composition that exhibits such anti-fog effects not only has high anti-fog performance and anti-fog persistence but also can exhibit a high viscosity stabilizing effect when contained in a coating stock solution or a film stock solution (also referred to as "anti-fog agent stock solution" hereinafter) for imparting an anti-fog function.

Polyvinyl alcohol resin also has better strength properties and film-forming properties, compared to the other water-soluble synthetic macromolecules. Accordingly, taking advantage of these properties, use of this resin as an anti-fouling agent, which is to be applied to the surface of a glass substrate, a metal substrate, a polymer film substrate, or the like, for example, is focused on. However, polyvinyl alcohol resin has low water resistance, and thus an ethylene-vinyl alcohol copolymer (Patent Document 2) as described in Patent Document 2 and a coating solution (Patent Document 3) in which an ethylene-vinyl alcohol copolymer is dissolved or dispersed in a mixed solvent of water and alcohol have been proposed as anti-fouling agents.

Here, it is desired that such a coating composition that exhibits such anti-fouling effects can exhibit good anti-fouling performance, greatly improve the safety of operators without using alcohol as a solvent for a coating solution, and contribute to a reduction of environmental loads.

Polyvinyl alcohol resin is widely used also as a binder for inorganic materials such as ceramic materials, concrete, mortar, and slate, taking advantage of its good strength properties and film-forming properties. Patent Document 4 proposes use of a polyvinyl alcohol resin containing a silyl group as a binder for inorganic substances (inorganic particles) such as inorganic fibers and glass fibers, for example.

Here, if a polyvinyl alcohol resin is applied to a coating composition such as the above-described binder for inorganic particles, it is desired that the coating composition exhibits a high viscosity stabilizing effect when an aqueous solution thereof is prepared as a coating solution, and thereby an inorganic particle-immobilized structure and a laminate that have high water resistance are provided.

On the other hand, in recent environments, maintenance of a high degree of safety of the natural environment and human body is required, and anti-bacterial plastic products have been used for various purposes. Therefore, products in which polyvinyl alcohol resin is used are also required to have anti-bacterial properties. Patent Document 5 discloses a modified polyvinyl alcohol resin in which a cationic group is introduced through copolymerization modification, and Non-Patent Document 1 discloses a blend of a polyvinyl alcohol resin and chitosan, for example. However, these compounds have extremely low water resistance, and cannot be practically usable in application where they may come into contact with water. In contrast, Non-Patent Document 2 discloses a cross-linked product obtained by cross-linking a blend of a polyvinyl alcohol resin and chitosan with glutaraldehyde, and suggests that water resistance thereof is improved.

Here, the above-described glutaraldehyde is a mutagenic compound and needs to be avoided practically from the viewpoint of ensuring safety. Therefore, with regard to products in which polyvinyl alcohol resin is used, coating compositions and anti-bacterial products that have high anti-bacterial properties, and higher safety and water resistance are desired.

### Related Art Documents

#### Patent Documents

Patent Document 1: JP2014-101439A
Patent Document 2: JP2016-002758A
Patent Document 3: JP2015-182401A
Patent Document 4: JP2014-095059A
Patent Document 5: JP2018-083802A

Non-Patent Documents

Non-Patent Document 1: Carbohydrate Polymers, 198, p.241-248 (2018)
Non-Patent Document 2: Polymer Preprints, Japan, Vo. 67, No.1, 2Pc045 (2018)

Summary of the Invention

Problem to be Solved by the Invention

The present invention aims to solve the above-described problems, and an object thereof is to provide a coating composition that can be used for various substrates and matrixes and can exhibit good properties as an anti-fog agent, an anti-fouling agent, a binder for inorganic particles, or an anti-bacterial agent, and also to provide an anti-fog member, an anti-fouling member, a laminate, and an anti-bacterial product in which the coating composition is used.

Means for Solving the Problem

That is, the present invention is achieved by providing:

[1] a coating composition comprising a modified polyvinyl alcohol resin (A) having an ethylenically unsaturated group in a side chain thereof;

[2] the coating composition according to [1], wherein the ethylenically unsaturated group includes a partial structure represented by Formula (I) below,

[Chemical Formula 1]

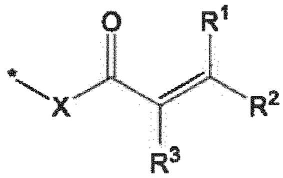

(I)

where, in Formula (I), $R^1$, $R^2$, and $R^3$ are independently a hydrogen atom, a methyl group, a carboxyl group, or a carboxymethyl group, X is an oxygen atom or $-N(R^4)-$, $R^4$ is a hydrogen atom or a hydrocarbon group having 1 to 3 carbon atoms, and * is an atomic bonding of the ethylenically unsaturated group;

[3] the coating composition according to [1] or [2], wherein the modified polyvinyl alcohol resin (A) includes a structural unit represented by Formula (II) or (III) below,

[Chemical Formula 2]

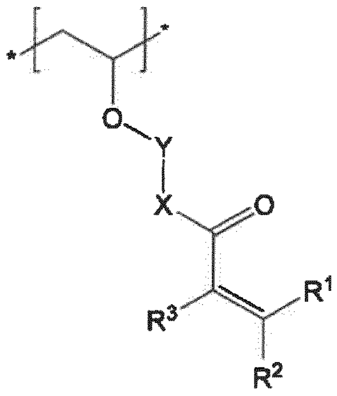

(I I)

where, in Formula (II), $R^1$, $R^2$, and $R^3$ are independently a hydrogen atom, a methyl group, a carboxyl group, or a carboxymethyl group, X is an oxygen atom or -N($R^4$)-, $R^4$ is a hydrogen atom or a hydrocarbon group having 1 to 3 carbon atoms, Y is a divalent hydrocarbon group having 1 to 10 carbon atoms that may have a substituent, and * is an atomic bonding of the structural unit in the modified polyvinyl alcohol resin (A), or

[Chemical Formula 3]

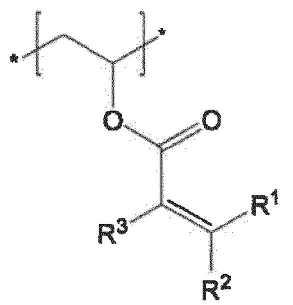

(I I I)

where, in Formula (III), $R^1$, $R^2$, and $R^3$ are independently a hydrogen atom, a methyl group, a carboxyl group, or a carboxymethyl group, and * is an atomic bonding of the structural unit in the modified polyvinyl alcohol resin (A);
[4] the coating composition according to any of [1] to [3], wherein the modified polyvinyl alcohol resin (A) contains the partial structure represented by Formula (I) in a ratio of 0.2 to 5 mol%;
[5] the coating composition according to any of [1] to [4], wherein the coating composition is used for providing a substrate with a physical property that is different from that of the substrate, and the substrate is composed of at least one type of material selected from the group consisting of resin, glass, and metal;
[6] the coating composition according to any of [1] to [5], which is used as an anti-fog agent for providing a substrate with an anti-fog property;
[7] the coating composition according to [6], wherein the substrate is a transparent support substrate;
[8] the coating composition according to [6] or [7], wherein the modified polyvinyl alcohol resin (A) contains the partial structure represented by Formula (I) in a ratio of 0.2 to 5 mol%;
[9] the coating composition according to any of [6] to [8], wherein the modified polyvinyl alcohol resin (A) has a number average molecular weight of 4,400 to 220,000;
[10] an anti-fog member comprising a substrate and an anti-fog layer, wherein the anti-fog layer contains a cured product of the coating composition according to any of [6] to [9];
[11] the anti-fog member according to [10], wherein an average water absorption ratio of the cured product is 4 to 200-fold;
[12] the coating composition according to any of [1] to [5], which is used as an anti-fouling agent for providing a substrate with an anti-fouling property;
[13] the coating composition according to [12], wherein the modified polyvinyl alcohol resin (A) has a number average

molecular weight of 4,400 to 220,000;
[14] an anti-fouling member comprising a substrate and an anti-fouling layer, wherein the anti-fouling layer contains a cured product of the coating composition according to [12] or [13];
[15] a method for producing an anti-fouling member, which comprises:

obtaining a pretreatment member having an uncured anti-fouling layer by applying the coating composition according to [12] or [13] onto a substrate; and
forming an anti-fouling layer by curing the uncured anti-fouling layer on the pretreatment member;

[16] the method according to [15], wherein the step of forming the anti-fouling layer is performed by irradiating the uncured anti-fouling layer on the pretreatment member with ultraviolet rays or an electron beam;
[17] the coating composition according to any of [1] to [5], which is used as a binder for inorganic particles for immobilizing inorganic particles (B1);
[18] an inorganic particle-immobilized structure, wherein a cured product of the coating composition according to [17] is disposed between inorganic particles (B1);
[19] the inorganic particle-immobilized structure according to [18], wherein the inorganic particles (B1) are silica particles or clay mineral particles;
[20] the inorganic particle-immobilized structure according to [18], wherein the inorganic particles (B1) are layered silicate particles;
[21] a laminate comprising a substrate and an inorganic particle-immobilized layer, wherein the inorganic particle-immobilized layer includes the inorganic particle-immobilized structure according to any of [18] to [20];
[22] the laminate according to [21], which is a gas barrier member;
[23] a package obtained by enclosing an object to be packaged in the laminate according to [22];
[24] the coating composition according to any of [1] to [5], further comprising an anti-bacterial component (B2), wherein the coating composition being used as a resin composition for providing a substrate with an anti-bacterial property;
[25] the coating composition according to [24], wherein the anti-bacterial component (B2) includes an ammonium salt-containing polymer;
[26] the coating composition according to [24] or [25], wherein the anti-bacterial component (B2) includes at least one type of compound selected from the group consisting of chitosan and a neutralized product of chitosan;
[27] the coating composition according to any of [24] to [26], wherein a mass ratio (A/B2) between the modified polyvinyl alcohol resin (A) and the anti-bacterial component (B2) is 99/1 to 40/60;
[28] the coating composition according to any of [24] to [27], further comprising a cross-linking agent or a photopolymerization initiator;
[29] a cured product of the coating composition according to any of [24] to [28];
[30] a method for producing a cured product, which comprises:
applying energy to the coating composition according to any of [24] to [28] to cross-link the coating composition;
[31] the method according to [30], wherein the step of applying energy is performed through heating or irradiation with active energy rays;
[32] an anti-bacterial product comprising a substrate and an anti-bacterial layer, wherein the anti-bacterial layer contains the cured product of the coating composition according to [29].

Effects of the Invention

According to the present invention, it is possible to form a coating layer applicable to various substrates and matrixes using a modified polyvinyl alcohol resin having a common structure.
When a coating composition according to the present invention is used as an anti-fog agent, for example, utilizing high cross-linking reactivity of a modified polyvinyl alcohol resin, which is a constituent component, makes it possible to impart anti-fog performance based on the obtained cross-linked cured product to a predetermined member. Furthermore, the production of such a cross-linked cured product can be controlled by performing, as a trigger, irradiation with high energy rays such as ultraviolet rays or electromagnetic waves, or heating, for example, and thus an anti-fog agent according to the present invention exhibits an extremely high viscosity stabilizing effect when contained in a coating stock solution or film stock solution for imparting anti-fog properties, for example.
When a coating composition according to the present invention is used as an anti-fouling agent, utilizing high cross-linking reactivity of the modified polyvinyl alcohol resin, which is a constituent component, makes it possible to impart anti-fouling properties and water resistance based on the obtained cross-linked cured product to a predetermined member. Also, the production of such a cross-linked cured product can be controlled by performing, as a trigger, irradiation with high energy rays such as ultraviolet rays or electromagnetic waves, or heating, for example, and thus an anti-fouling

agent according to the present invention exhibits an extremely high viscosity stabilizing effect when contained in a coating stock solution or film stock solution (also referred to as "anti-fouling agent stock solution" hereinafter) for imparting anti-fouling properties, for example. Furthermore, there is no need to use alcohol as a solvent to be contained as a constituent component in the coating composition, or a solvent to be used when the coating composition is used, and therefore, the safety of operators is improved, and environmental loads can also be reduced.

When a coating composition according to the present invention is used as an inorganic particle binder, utilizing high cross-linking reactivity of a modified polyvinyl alcohol resin, which is a constituent component, makes it possible to form an immobilized structure in which inorganic particles are firmly immobilized by a cross-linked cured product obtained through cross-linking. This inorganic particle-immobilized structure has good water resistance. Also, such a binder for inorganic particles exhibits a high viscosity stabilizing effect when an aqueous solution thereof is prepared as a coating solution.

When a coating composition according to the present invention is used as an anti-bacterial composition or an anti-bacterial agent, a coating layer that exhibits high anti-bacterial activity is obtained. Furthermore, utilizing high cross-linking reactivity of a modified polyvinyl alcohol resin, which is a constituent component, makes it possible to obtain, through cross-linking, a cross-linked cured product having high water resistance in addition to the anti-bacterial properties.

When a coating composition according to the present invention is used as an anti-bacterial resin composition in the presence of an anti-bacterial component, this composition exhibits high anti-bacterial activity and high cross-linking reactivity. Therefore, a cross-linked cured product obtained using this composition can exhibit high water resistance in addition to exhibiting advanced anti-bacterial activity.

Brief Description of Drawings

FIG. 1 shows photographs indicating the difference in anti-fog performance of anti-fog coated films produced in Example 1-12 and Comparative Example I-4. FIG. 1(a) is a photograph showing the state of an anti-fog coated film (DE4) produced in Example 12 when an anti-fog test was started (0 min), FIG. 1(b) is a photograph showing the state of the anti-fog coated film (DE4) after the anti-fog test was started (after 5 min), FIG. 1(c) is a photograph showing the state of an anti-fog coated film (DC1) produced in Comparative Example 4 when an anti-fog test was started (0 min), and FIG. 1(d) is a photograph showing the state of the anti-fog coated film (DC1) after the anti-fog test was started (after 5 min).

Description of Embodiments

Coating composition

(1) Modified polyvinyl alcohol resin (A)

A coating composition according to the present invention contains a modified polyvinyl alcohol resin (A) having an ethylenically unsaturated group in a side chain thereof.

In the coating composition according to the present invention, there is no particular limitation on the structure of the ethylenically unsaturated group introduced into the side chain of the modified polyvinyl alcohol resin (A), and examples thereof include radically polymerizable unsaturated groups. In particular, such an ethylenically unsaturated group preferably includes a partial structure represented by Formula (I) below.

[Chemical Formula 4]

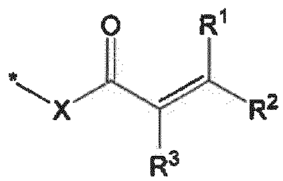

(I)

In Formula (I), $R^1$, $R^2$, and $R^3$ are independently a hydrogen atom, a methyl group, a carboxyl group, or a carboxymethyl group, X is an oxygen atom or $-N(R^4)-$, $R^4$ is a hydrogen atom or a hydrocarbon group having 1 to 3 carbon atoms, and * is an atomic bonding of the ethylenically unsaturated group.

In Formula (I) above, $R^1$ and $R^2$ are preferably hydrogen atoms, and $R^3$ is preferably a methyl group because

favorable polymerization stability is obtained. Also, in Formula (I) above, when X is -N($R^4$)-, examples of the hydrocarbon group having 1 to 3 carbon atoms, which may constitute $R^4$, include a saturated hydrocarbon group having 1 to 3 carbon atoms. Specifically, $R^4$ is preferably an alkyl group having 1 to 3 carbon atoms. Examples of the alkyl group having 1 to 3 carbon atoms include a methyl group, an ethyl group, an n-propyl group, and an isopropyl group. Note that X is preferably an oxygen atom in Formula (I) above because high reactivity is obtained.

Furthermore, in the present invention, the modified polyvinyl alcohol resin (A) preferably includes a structural unit represented by Formula (II) or (III) below.

[Chemical Formula 5]

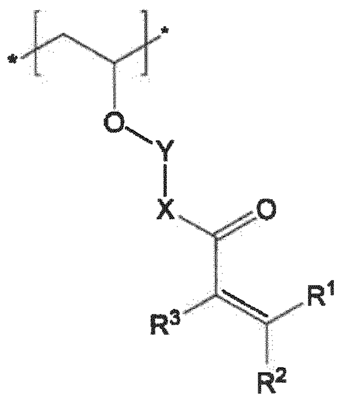

(II)

In Formula (II), $R^1$, $R^2$, and $R^3$ are independently a hydrogen atom, a methyl group, a carboxyl group, or a carboxymethyl group, X is an oxygen atom or -N($R^4$)-, $R^4$ is a hydrogen atom or a hydrocarbon group having 1 to 3 carbon atoms, Y is a divalent hydrocarbon group having 1 to 10 carbon atoms that may have a substituent, and * is an atomic bonding of a structural unit in the modified polyvinyl alcohol resin (A).

[Chemical Formula 6]

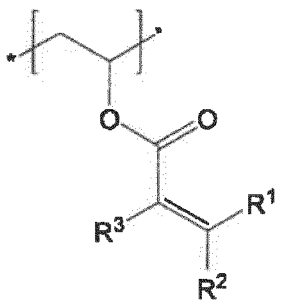

(III)

In Formula (III), $R^1$, $R^2$, and $R^3$ are independently a hydrogen atom, a methyl group, a carboxyl group, or a carboxymethyl group, and * is an atomic bonding of a structural unit in the modified polyvinyl alcohol resin (A).

In Formulas (II) and (III) above, $R^1$ and $R^2$ are preferably hydrogen atoms, and $R^3$ preferably represents a methyl group because favorable polymerization stability is obtained.

Also, in Formula (II) above, when X is -N($R^4$)-, examples of the hydrocarbon group having 1 to 3 carbon atoms, which may constitute $R^4$, include a saturated hydrocarbon group having 1 to 3 carbon atoms. Specifically, $R^4$ is preferably an alkyl group having 1 to 3 carbon atoms. Examples of the alkyl group having 1 to 3 carbon atoms include a methyl group, an ethyl group, an n-propyl group, and an isopropyl group. Note that X is preferably an oxygen atom in Formula (II) above because high reactivity is obtained.

Furthermore, examples of the divalent hydrocarbon group having 1 to 10 carbon atoms, which may constitute Y in Formula (II), include an alkylene group having 1 to 10 carbon atoms and a cycloalkylene group having 1 to 10 carbon groups. Examples of the alkylene group having 1 to 10 carbon atoms include a methylene group, an ethylene group, a propylene group, a butylene group, a pentylene group, a hexylene group, a heptylene group, an octylene group, a nonylene group, and a decylene group. Examples of the cycloalkylene group having 1 to 10 carbon atoms include a

cyclopropylene group, a cyclobutylene group, a cyclopentylene group, and a cyclohexylene group. These alkylene groups and cycloalkylene groups may have an alkyl group such as a methyl group and an ethyl group as a branched structure. Also, the divalent hydrocarbon group having 1 to 10 carbon atoms, which may constitute Y, may be substituted with a predetermined substituent. Examples of such a substituent include a hydroxy group; an amino group; an alkoxy group such as a methoxy group, an ethoxy group, and a propoxy group; and an acyl group such as an acetyl group and a propionyl group, and the structure of the substituent optionally includes a carbonyl bond, an ether bond, an ester bond, an amide bond, or the like. Also, Y may form an acetal structure together with a part of the main chain of the modified polyvinyl alcohol resin (A).

In the present invention, the modified polyvinyl alcohol resin (A) is particularly preferably a modified polyvinyl alcohol resin (A) having a structural unit represented by Formula (III), among the modified polyvinyl alcohol resins (A) containing the structural units represented by Formula (II) and (III) above.

Note that specific examples of the structural unit represented by any of Formulas (I) to (III) above include the structural unit shown below:

[Chemical Formula 7]

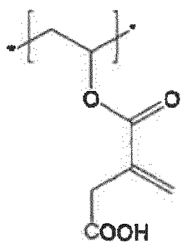
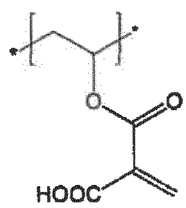
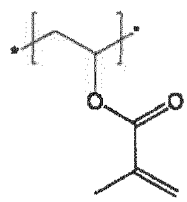
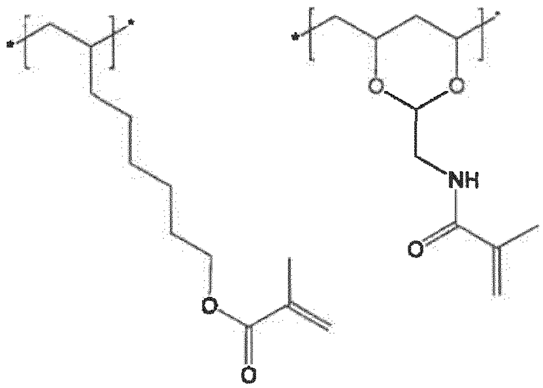
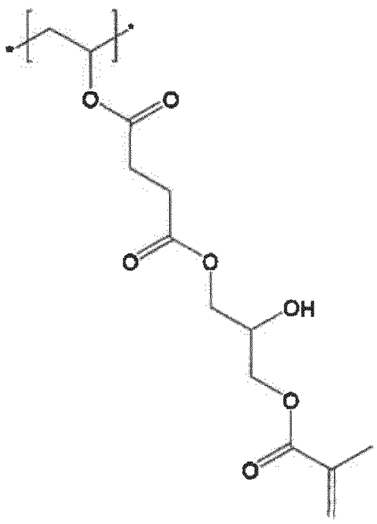

In the formulas, * is an atomic bonding of the structural unit in the modified polyvinyl alcohol resin (A).

In the present invention, there is no particular limitation on the lower limit of the content of the structural unit having an ethylenically unsaturated group (e.g., the structural unit that includes a partial structure represented by Formula (I)) in all of the structural units of the modified polyvinyl alcohol resin (A), and the content thereof is preferably 0.05 mol% or more, more preferably 0.1 mol% or more, even more preferably 0.2 mol% or more, and particularly preferably 0.5 mol% or more where the amount of all of the structural units of the modified polyvinyl alcohol resin (A) is taken as 100 mol%. Also, there is no particular limitation on the upper limit of the content of the structural unit having an ethylenically unsaturated group (e.g., the structural unit that includes a partial structure represented by Formula (I)), and the content thereof is preferably 8 mol% or less, more preferably 5 mol% or less, and particularly preferably 3 mol% or less where the amount of all of the structural units of the modified polyvinyl alcohol resin (A) is taken as 100 mol%. When the content of the structural units having the ethylenically unsaturated group is within the range composed of such lower and upper limits, with the coating composition according to the present invention, the ethylenically unsaturated groups of the side chains of the modified polyvinyl alcohol resin (A) are likely to react with each other through irradiation with high energy rays or electromagnetic waves, or heating, and the modified polyvinyl alcohol resin (A) can be cured in an appropriate

reaction time. Furthermore, all of the structural units of the modified polyvinyl alcohol resin (A) may be constituted by two or more types of structural units having an ethylenically unsaturated group. If two or more types of structural units having an ethylenically unsaturated groups are included, for example, the content of these two or more types of structural units having an ethylenically unsaturated group is preferably within the range composed of the above-described lower limit and upper limit. Note that the term "structural unit" in this specification refers to a repeat unit for constituting a polymer. A "vinyl alcohol unit" and a "vinyl ester unit", which will be described later, for example, are also included as examples of the "structural unit".

In the present invention, there is no particular limitation on the lower limit of the content of the vinyl alcohol unit in all of the structural units of the modified polyvinyl alcohol resin (A), and the content thereof is preferably 60 mol% or more, more preferably 70 mol% or more, even more preferably 80 mol% or more, and particularly preferably 85 mol% or more where the amount of all of the structural units of the modified polyvinyl alcohol resin (A) is taken as 100 mol%. Also, there is no particular limitation on the upper limit of the content of the above-described vinyl alcohol unit, and the content thereof is preferably 99.95 mol% or less, more preferably 99.9 mol% or less, even more preferably 99.5 mol% or less, and particularly preferably 99.0 mol% or less, where the amount of all of the structural units of the modified polyvinyl alcohol resin (A) is taken as 100 mol%. When the content of the vinyl alcohol unit is within the range composed of such lower and upper limits, the coating composition according to the present invention can impart appropriate hydrophilicity and high durability to a cured product obtained after the modified polyvinyl alcohol resin (A) is cured through irradiation with high energy rays or electromagnetic waves, or heating, and impart a high viscosity stabilizing effect to a coating solution, which can be prepared by mixing the cured product and water.

A vinyl alcohol unit can be derived from a vinyl ester unit through hydrolysis, alcoholysis, or the like. Therefore, a vinyl ester unit may remain in the modified polyvinyl alcohol resin (A) depending on conditions and the like during conversion from the vinyl ester unit to the vinyl alcohol unit. Thus, the modified polyvinyl alcohol resin (A) may contain a vinyl ester unit other than the above-described structural units having an ethylenically unsaturated group.

Examples of vinyl ester of the vinyl ester unit include vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, and vinyl benzoate, and specifically, vinyl acetate is preferable from an industrial point of view.

The modified polyvinyl alcohol resin (A) may further contain other structural units other than a structural unit having an ethylenically unsaturated group, the vinyl alcohol unit, and the vinyl ester unit as long as the effects of the present invention can be achieved. The other structural units are structural units derived from other monomers that are copolymerizable with vinyl ester, for example. Examples of the other monomers include ethylenically unsaturated monomers. The structural unit derived from the other monomers may be a structural unit that can be converted into a structural unit having an ethylenically unsaturated group. Examples of the ethylenically unsaturated monomer include $\alpha$-olefins such as ethylene, propylene, n-butene, isobutylene, and 1-hexene; acrylic acid and salts thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide, N-methylacrylamide, N-ethylacrylamide, N,N-dimethylacrylamide, diacetone acrylamide, acrylamide propanesulfonic acid and salts thereof, acrylamide propyl dimethylamine and salts thereof (e.g., quaternary salts); methacrylamide, N-methylmethacrylamide, N-ethylmethacrylamide, methacrylamide propanesulfonic acid and salts thereof, methacrylamide propyl dimethylamine and salts thereof (e.g., quaternary salts); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; vinyl cyanides such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane, and allyl chloride; unsaturated dicarboxylic acids such as maleic acid, itaconic acid, and fumaric acid, and salts thereof or esters thereof; vinylsilyl compounds such as vinyltrimethoxysilane; isopropenyl acetate; and combinations thereof.

There is no particular limitation on the arrangement order of the structural unit having the ethylenically unsaturated group, the vinyl alcohol unit, and any other structural unit in the modified polyvinyl alcohol resin (A), and the modified polyvinyl alcohol resin (A) may be any of a random copolymer, a block copolymer, an alternating copolymer, and the like.

The molecular weight of the modified polyvinyl alcohol resin (A) is not particularly limited, and the modified polyvinyl alcohol resin (A) preferably has a number average molecular weight (Mn) of 5,000 to 200,000. If Mn is less than 5,000, it may not be possible to impart sufficient durability to a cured product obtained by curing such a modified polyvinyl alcohol resin. Mn is more preferably 7,000 or more, even more preferably 8,000 or more, and particularly preferably 9,000 or more, and if Mn exceeds 200,000, when a solution such as a coating solution that may be prepared using such a modified polyvinyl alcohol resin is prepared, it may not be possible to impart sufficient viscosity stability to the solution. Mn is more preferably 180,000 or less, even more preferably 150,000 or less, and particularly preferably 100,000 or less. Mn can be calculated as a value measured through gel permeation chromatography (GPC) using

polymethylmethacrylate as a standard, and a HFIP column.

The number-average degree of polymerization, which is measured according to JIS K6726 (1994), of the modified polyvinyl alcohol resin (A) in the coating composition of the present invention is not particularly limited, and is preferably 100 to 5,000 and more preferably 200 to 4,000. If the number-average degree of polymerization is lower than 100, the mechanical strength of a coat obtained using this composition may decrease. If the number-average degree of polymerization exceeds 5,000, more advanced techniques may be required to produce such a modified polyvinyl alcohol resin (A), and it may be difficult to maintain industrial productivity.

The degree of saponification of the modified polyvinyl alcohol resin (A) in the coating composition of the present invention is not particularly limited, and is preferably 80 to 99.9 mol% and more preferably 90 to 99.9 mol%. If the degree of saponification of the modified polyvinyl alcohol resin (A) is less than 80 mol%, it may not be possible to impart sufficient durability to a cured product obtained by curing such a modified polyvinyl alcohol resin. If the degree of saponification of the modified polyvinyl alcohol resin (A) exceeds 99.9 mol%, when a solution such as a coating solution that may be prepared using such a modified polyvinyl alcohol resin is prepared, it may not be possible to impart sufficient viscosity stability to the solution.

There is no particular limitation on a method for producing the modified polyvinyl alcohol resin (A). It is possible to produce the modified polyvinyl alcohol resin (A) having a partial structure represented by Formula (I) above in the side chain through a reaction of polyvinyl alcohol with a compound having an ethylenically unsaturated group in the structure (e.g., a compound having a carboxylic acid). Specific examples of the reaction include a transesterification reaction between polyvinyl alcohol and an acrylic acid ester or methacrylic acid ester; a reaction between polyvinyl alcohol and an acrylic acid, methacrylic acid, 4-pentenoic acid, or 10-undecenoic acid; a reaction between polyvinyl alcohol and acrylic anhydride or methacrylic anhydride; and a reaction between polyvinyl alcohol and acryloyl chloride or methacryloyl chloride.

(2) Cross-linking agent

The coating composition according to the present invention may contain a cross-linking agent known in the art. Preferred examples of the cross-linking agent include a compound having two or more thiol groups in one molecule, and a compound having two or more amino groups in one molecule. Examples of the compound having two or more thiol groups in one molecule include 1,2-ethanedithiol, 1,3-propanedithiol, 1,4-buthanedithiol, 2,3-buthanedithiol, 1,5-penthanedithiol, 1,6-hexanedithiol, 1,10-decanedithiol, 2,3-dihydroxy-1,4-buthanedithiol, ethylene bis(thioglycolate), ethylene glycol bis(3-mercaptopropionate), 1,4-butanediol bis(thioglycolate), 2,2'-thiodiethanethiol, 3,6-dioxa-1,8-octanedithiol (DODT), 3,7-Dithia-1,9-nonandithiol, 1,4-benzendithiol, trimethylolpropane tris(3-mercaptopropionate), trimethylolpropane tris(thioglycolate), pentaerythritol tetrakis(mercaptoacetate), dipentaerythritol hexakis(3-mercaptopropionate), and THIOKOL (Toray Fine Chemicals Co., Ltd.). Examples of the compound having two or more amino groups in one molecule include ethylenediamine, 1,2-diaminopropane, 1,3-diaminopropane, 2,2-dimethyl-1,3-propanediamine, 1,2-diamino-2-methylpropane, 2-methyl-1,3-propanediamine, 1,2-diaminobutane, 1,4-diaminobutane, 1,3-diaminopentane, 1,5-diaminopentane, 1,6-diaminohexane, 2-methyl-1,5-diaminopentane, 1,7-diaminoheptane, 1,8-diaminooctane, 1,9-diaminononane, 1-methyl-1,8-diaminooctane, 1,10-diaminodecane, 1,11-diaminoundecane, 1,12-diaminododecane, bis(3-aminopropyl)ether, 1,2-bis(3-aminopropoxy)ethane, 1,3-bis(3-aminopropoxy)-2,2-dimethylpropane, 2,2'-oxybis(ethylamine), 1,3-diamino-2-propanol, a,ca-bis(3-aminopropyl)polyethyleneglycol ether, 1,2-diaminocyclohexane, 1,3-diaminocyclohexane, 1,4-diaminocyclohexane, 1,3-bis(aminomethyl)cyclohexane, 1,4-bis(aminomethyl)cyclohexane, 4-(2-aminoethyl)cyclohexylamine, isophoronediamine, and 1,4-phenylenediamine.

The content of the cross-linking agent is not particularly limited, and is preferably 0.1 parts by mass to 20 parts by mass, and more preferably 0.5 parts by mass to 10 parts by mass with respect to 100 parts by mass of the modified polyvinyl alcohol resin (A), for example. If the content of cross-linking agent is less than 0.1 parts by mass, there is a risk that the cross-linked structure may not be sufficiently formed by the modified polyvinyl alcohol resin (A), and satisfactory water resistance of the resulting cured product may not be achieved. If the content of the cross-linking agent exceeds 20 parts by mass, there is a risk that cross-linking may not proceed any further in the resulting cured product, and the productivity may decrease.

(3) Photopolymerization initiator

The coating composition according to the present invention may contain a photopolymerization initiator known in the art, instead of the above-described cross-linking agent or in addition to the above-described cross-linking agent. Examples of the photopolymerization initiator include, but are not particularly limited to, propiophenone-based compounds such as 2-hydroxy-4'-(2-hydroxyethoxy)-2-methylpropiophenone; acetophenone-based compounds such as 4'-phenoxy- 2,2-dichloroacetophenone, 4'-t-butyl-2,2,2-trichloroacetophenone, 2,2-dietoxyacetophenone, 2-hydroxy-2-methylpropiophenone, 2-hydroxy-2-methyl-1-(4'-dodecylphenyl)-1-propanone, 1-[4'-(2-hydroxyethoxy)phenyl]-2-hydroxy-2-methyl-1-propanone, 1-hydroxycyclohexyl phenyl ketone, and 2-methyl-4'-methylthio-2-morpholinopropiophenone; benzoin-based compounds such as benzoin, benzoin methyl ether, benzoin ethyl ether, benzoin isopropyl ether, benzoin butyl ether, and benzyl dimethyl ketal; benzophenone-based compounds such as benzophenone, methyl o-benzoylbenzoate, 4-phenylbenzophenone, 2-chlorobenzophenone, 2,2'-dichlorobenzophenone, 4-hydroxybenzophenone, 4,4'-dihydroxybenzophenone, 4-benzoyl-4'-methyl-diphenyl sulfide, 3,3'-dimethyl-4-methoxybenzophenone, Michler's ketone [4,4'-bis(dimethylamino)benzophenone], and 4,4'-bis(diethylamino)benzophenone; thioxanthone-based compounds such as 2-chlorothioxanthone, 2-methylthioxanthone, 2-isopropylthioxanthone, 2,4-dichlorothioxanthone, 2,4-diethylthioxanthone, and 2,4-diisopropylthioxanthone; quinone-based compounds such as 9,10-phenanthrenequinone, camphorquinone (2,3-bornanedione), and 2-ethylanthraquinone; diphenyl(2,4,6-trimethylbenzoyl)phosphine oxide; and benzil.

The content of the photopolymerization initiator is not particularly limited, and is preferably 0.1 parts by mass to 10 parts by mass, and more preferably 0.2 parts by mass to 5 parts by mass with respect to 100 parts by mass of the modified polyvinyl alcohol resin (A), for example. If the content of the photopolymerization initiator is less than 0.1 parts by mass, for example, even if the modified polyvinyl alcohol resin (A) is appropriately irradiated with UV light, there is a risk that the cross-linked structure may not be sufficiently formed by this resin (A), and satisfactory water resistance of the resulting cured product may not be achieved. If the content of the photopolymerization initiator exceeds 10 parts by mass, there is a risk that cross-linking may not proceed any further in the resulting cured product, and the productivity may decrease.

(4) Other additive agents

The coating composition according to the present invention may further contain other additive agents other than the above-described modified polyvinyl alcohol resin (A), the above-described cross-linking agent, and the above-described photopolymerization initiator, as long as the effects of the present invention are not impaired. Examples of the other additive agents include pigments, dyes, fillers, processing stabilizing agents, weather-resistant stabilizing agents, coloring agents, ultraviolet absorbing agents, antioxidants, antistatic agents, flame retardants, plasticizers, other thermoplastic resins, lubricants, flavors, antifoaming agents, deodorizing agents, bulking agents, stripping agents, release agents, reinforcing agents, fungicides, antiseptic agents, radical precursors, and crystallization rate retarders, and combinations thereof.

(5) Diluent

Also, the coating composition according to the present invention may contain a diluent and have a form in which the modified polyvinyl alcohol resin (A) is diluted with the diluent. Examples of the diluent include water; alcohols such as methanol and ethanol; ketones such as acetone; ethers such as diethyl ether; and combinations thereof. The amount of diluent to be used is not particularly limited, and an appropriate amount thereof may be selected as appropriate by persons skilled in the art. Here, if water is used as a diluent, for example, the coating composition of the present invention may have the form of an aqueous solution of the modified polyvinyl alcohol resin (A) (this solution may be referred to as a "coating solution" in this specification). Alternatively, when a coat is produced using the coating composition of the present invention as described later, this water can be used as a solvent for dissolving the coating composition of the present invention to prepare an aqueous solution.

With the coating composition of the present invention, cross-linking of the modified polyvinyl alcohol resin (A), which is a constituent component, is facilitated through irradiation with high energy rays or electromagnetic waves, or heating, and a cured product (cross-linked product) of the modified polyvinyl alcohol resin (A) can be obtained. The cured product of the modified polyvinyl alcohol resin (A), which can be obtained in this manner, is strongly bonded to various substrates (e.g., resin, glass, and metal, and combinations thereof), and a coat containing the cross-linked product of the modified polyvinyl alcohol resin (A) can be formed on the substrates.

(6) Applications of coating composition

The coating composition according to the present invention can be used for various applications, by utilizing unique properties of the modified polyvinyl alcohol resin (A), which is a constituent component thereof. Examples of specific applications include, but are not limited to, anti-fog agents, anti-fouling agents, binders for inorganic particles, and resin compositions for providing anti-bacterial properties.

Examples of specific applications

(1) Anti-fog agent and anti-fog member in which anti-fog agent is used (1-1) Anti-fog agent

The coating composition of the present invention may be used as an anti-fog agent for providing a substrate with anti-fog properties, for example.

The term "anti-fog agent" used in this specification refers to an uncured composition that can form a coat that exhibits anti-fog performance on the surface of a transparent support substrate after being applied onto the substrate and then cured, for example. A coat, which has been already cured and exhibits anti-fog performance, is excluded, for example.

If the coating composition of the present invention is used as an anti-fog agent, it is possible to provide water absorbency to the surface of a coat on a member (also referred to as an "anti-fog member") in which the coat is formed on a transparent support substrate, and to inhibit the formation of droplets on the surface of the coat through water absorption and exhibit anti-fog performance, for example. In this respect, the coat, which can be formed by using the coating composition of the present invention as an anti-fog agent, is hydrophilic.

(1-2) Anti-fog member

An anti-fog member according to the present invention includes a transparent support substrate and an anti-fog layer.

The transparent support substrate may be colorless or colored as long as it is composed of a material that is transparent enough to maintain visibility from one side to the other side. The transparent support substrate may be a plate-shaped member (e.g., a window member) having a smooth flat surface, or may be formed to have a predetermined shape (e.g., a headlight cover for a vehicle, for example). From the viewpoint of improving strength, fire resistance or fire retardant properties, soundproofing, and/or crime prevention; absorption or reflection of heat rays; imparting non-reflection or low reflection of light; prevention or reduction of temperature conduction; and the like, the transparent support substrate may also contain a metal wire, a filler, an additive agent for a substrate, and the like in any ratio.

Examples of the transparent support substrate include, but are not particularly limited to, a glass substrate and a resin substrate. Examples of the glass substrate include substrates made of float glass, tempered glass, heat-resistant glass, fireproof glass, design glass, colored glass, laminated glass, frosted glass, double-glazed glass, non-reflective glass, low-reflective glass, wire mesh glass, wired glass, high-transmission glass, heat reflective glass, electromagnetic wave shielding glass, and sapphire glass. Examples of the resin substrate include substrates made of thermoplastic resin or thermosetting resin such as polyethylene (PE) resin, polypropylene (PP) resin, polymethylmethacrylate (PMMA) resin, polyethylene terephthalate (PET) resin, polycarbonate (PC) resin, polyvinyl chloride (PVC) resin, polystyrene (PS) resin, alicyclic acrylic resin, alicyclic polyolefin resin, poly-4-methylterpene-1 resin, vinylidene chloride resin, or transparent epoxy resin.

The thickness of the transparent support substrate is not particularly limited, and a substrate having an appropriate thickness may be selected as appropriate by persons skilled in the art. In order to improve adhesion to the anti-fog layer, for example, surface processing such as polishing may be performed on the surface side of the transparent support substrate where the anti-fog layer is provided, using a method known to persons skilled in the art.

In the anti-fog member of the present invention, the anti-fog layer (may also be referred to as a "coat") contains a cured product of the coating composition of the present invention and is provided on one surface of the transparent support substrate, for example.

In order to provide appropriate anti-fog performance to the anti-fog layer of the anti-fog member, the cured product preferably has a predetermined water absorbency. In the present invention, an average water absorption ratio of the cured product contained in the anti-fog layer is preferably 2 to 250-fold, more preferably 4 to 200-fold, even more preferably 5 to 150-fold, and particularly preferably 8 to 100-fold. If the average water absorption ratio of the cured product is less than 2-fold, the hydrophilicity of the anti-fog layer may decrease, and the anti-fog performance thereof may decrease. If the average water absorption ratio of the cured product exceeds 250-fold, the adhesiveness to the transparent support substrate may decrease. Such an average water absorption ratio can be adjusted using (i) a method for subjecting a coating layer made of the coating composition provided on a substrate, which will be described later, to a treatment such as high energy ray irradiation or the like in a water-containing state by adjusting the amount of water used as a constituent component of the coating composition (the anti-fog agent) of the present invention or a solvent for preparing an aqueous solution from the coating composition (the anti-fog agent) of the present invention, (ii) a method for adjusting the crosslink density of a modified polyvinyl alcohol resin (A) by adjusting the content of a structural unit having an ethylenically unsaturated group of the modified polyvinyl alcohol resin (A) contained in the coating composition, (iii) a method for adding a water-absorbing resin such as polyacrylic acid to a stock solution or an aqueous solution containing the coating composition, or the like.

In order to exhibit more uniform anti-fog performance, the anti-fog layer is preferably provided with a uniform thickness on the entire transparent support substrate. The film thickness of the anti-fog layer is preferably 0.1 to 200 μm, more preferably 0.2 to 100 μm, and even more preferably 0.3 to 50 μm. If the film thickness of the anti-fog layer is less than 0.1 μm, the anti-fog layer may not be able to impart uniform anti-fog performance on the transparent support substrate. If the film thickness of the anti-fog layer exceeds 200 μm, a larger amount of the anti-fog agent may be required in order to form the anti-fog layer, and the transparency of an anti-fog member obtained may decrease due to an increase in the film thickness.

The anti-fog member of the present invention may also be provided with another layer for enhancing adhesiveness (an adhesive layer composed of components known to persons skilled in the art, for example) between the anti-fog layer and the transparent support substrate. The other layer is preferably composed of a material having transparency to an extent that the transparency of the transparent support substrate is not significantly impaired. The film thickness of the other layer is not particularly limited, and an appropriate thickness may be selected by persons skilled in the art.

The anti-fog member according to the present invention can be produced as follows, for example.

First, an aqueous solution of the coating composition of the present invention is prepared.

If a coating composition does not contain water in advance, a uniform aqueous solution is prepared by adding water to dissolve the coating composition. If an aqueous solution of the coating composition has been prepared in advance, the concentration may be adjusted by further adding water as needed. If the coating composition does not contain a cross-linking agent or a photopolymerization initiator, the cross-linking agent or the photopolymerization initiator may be added together with the coating composition when preparing this aqueous solution.

The content of water used to obtain an aqueous solution of the coating composition is not particularly limited, and is preferably 250 to 9,900 parts by mass, and more preferably 400 to 3,000 parts by mass, with respect to 100 parts by mass of the modified polyvinyl alcohol resin (A), for example. When the aqueous solution of the coating composition contains water in such a range, the cured product obtained by cross-linking the polyvinyl alcohol resin (A) has an appropriate average water absorption ratio, and can provide favorable anti-fog performance to the resulting anti-fog layer.

Then, an aqueous solution of the coating composition is applied to a desired surface or portion, which is desired to be provided with anti-fog performance, out of surfaces or portions that constitute the transparent support substrate. This aqueous solution can be applied using a method known in the art, such as spray coating, roll coating, spin coating, air knife coating, blade coating, brush coating, or immersion, for example. After the aqueous solution is applied, the coating layer formed on the substrate is preferably in a water-containing state. Due to the coating layer being in the water-containing state, the modified polyvinyl alcohol resin (A) contained in the coating composition in this coating layer is cross-linked in the water-containing state through a treatment such as high energy ray irradiation, which will be described later, or the like. As a result, the water absorption ratio of the cross-linked cured product is increased, and anti-fog properties are improved. Therefore, the coating layer obtained after the aqueous solution of the coating composition is applied onto the substrate is preferably subjected to a treatment such as the later-described high energy ray irradiation, in the water-containing state.

Thereafter, the layer on the transparent support to which the coating composition was applied is irradiated with high energy rays or electromagnetic waves, or the transparent support substrate to which the coating composition was applied is heated at a predetermined temperature. Examples of high energy rays include electron beams. Examples of electromagnetic waves include ultraviolet rays (UV light), visible light, and infrared rays. The temperature at which the substrate is heated is in a range of 50°C to 200°C, for example. In particular, it is preferable to use UV light because a more homogeneous cured product of the modified polyvinyl alcohol resin (A) can be obtained without requiring complicated equipment or the like. The coating layer is irradiated with UV light not only emitted from a light source such as an ultraviolet lamp but also through sunlight by being exposed to the outdoors.

It is possible to obtain the anti-fog member of the present invention in which the anti-fog layer having a predetermined anti-fog performance is formed on the transparent support substrate in this manner.

The anti-fog member of the present invention can be used in various applications in which it is desired to avoid the occurrence of fogging on the surface of the member. Examples of the applications include, but are not particularly limited to, windows and headlight covers for vehicles (e.g., automobiles and trains), aircraft, and ships; architectural (e.g., building and residential) window members (e.g., windowpanes); bathroom or washroom mirrors; road traffic mirrors; security camera lenses; digital camera lenses; broadcast camera lenses; eyeglass lenses; sunglass lenses; goggles for sports or leisure (e.g., skiing, snowboarding, snorkeling, and scuba diving); and agricultural house constituent materials (e.g., plastic sheets, plastic films, and windowpanes).

The anti-fog member of the present invention can remove or reduce fogging caused by moisture present on (the anti-fog layer of) the anti-fog member, utilizing the water absorbing function of the cured product of the modified polyvinyl alcohol resin (A) contained in the anti-fog layer. Furthermore, the moisture contained in the anti-fog layer can be easily released from the anti-fog member through drying. Accordingly, the anti-fog member of the present invention can exhibit anti-fog performance by repeating water absorption and drying.

(2) Anti-fouling agent and anti-fouling member in which anti-fouling agent is used

(2-1) Anti-fouling agent

The coating composition of the present invention can be used as an anti-fouling agent for providing a substrate with anti-fouling properties, for example.

The term "anti-fouling agent" used in this specification refers to an uncured composition that can form a coat that exhibits anti-fouling performance on the surface of a substrate after being applied onto the substrate and then cured, for example. The coat, which has been already cured and has anti-fouling performance, is excluded, for example.

If the coating composition of the present invention is used as an anti-fouling agent, in a member (also referred to as an "anti-fouling member") in which the coat (an anti-fouling layer) is formed on the substrate, the surface of the coat has water resistance, and the water resistance can inhibit the formation of water droplets on the surface of the coat and remove contaminants that may adhere to the surface of the anti-fouling member.

(2-2) Anti-fouling member

The anti-fouling member of the present invention includes a substrate and an anti-fouling layer.

The substrate that may be included in the anti-fouling member of the present invention may be colorless or colored. The substrate may also be a plate-shaped member (e.g., a windowpane) having a smooth flat surface, or a molded body having a predetermined shape (e.g., a resin molded body having any shape), for example. From the viewpoint of improving strength, fire resistance or fire retardant properties, soundproofing, and/or crime prevention; absorption or reflection of heat rays; imparting non-reflection or low reflection of light; prevention or reduction of temperature conduction; and the like, the transparent support substrate may also contain a metal wire, a filler, an additive agent for a substrate, and the like in any ratio.

Examples of the substrate that may be included in the anti-fouling member of the present invention include, but are not particularly limited to, glass substrates and resin substrates. Examples of the glass substrate include substrates made of float glass, tempered glass, heat-resistant glass, fireproof glass, design glass, colored glass, laminated glass, frosted glass, double-glazed glass, non-reflective glass, low-reflective glass, wire mesh glass, wired glass, high-transmission glass, heat reflective glass, electromagnetic wave shielding glass, and sapphire glass. Examples of the resin substrate include substrates (e.g., films and sheets) made of thermoplastic resin or thermosetting resin such as polyethylene (PE) resin, polypropylene (PP) resin, polymethylmethacrylate (PMMA) resin, polyethylene terephthalate (PET) resin, polycarbonate (PC) resin, polyvinyl chloride (PVC) resin, polystyrene (PS) resin, alicyclic acrylic resin, alicyclic polyolefin resin, poly-4-methylterpene-1 resin, vinylidene chloride resin, or transparent epoxy resin.

The thickness of the substrate that may be included in the anti-fouling member of the present invention is not particularly limited, and a substrate having an appropriate thickness may be selected as appropriate by persons skilled in the art. In order to improve adhesion to the anti-fouling layer, for example, surface processing such as polishing may be performed on the surface side of the substrate where the anti-fouling layer is provided, using a method known to persons skilled in the art.

In the anti-fouling member of the present invention, the anti-fouling layer (or may also be referred to as a "coat") contains a cured product of the coating composition of the present invention and is provided on one surface of the substrate, for example.

In order to exhibit more uniform anti-fouling performance, the anti-fouling layer is preferably provided with a uniform thickness on the entire substrate. The film thickness of the anti-fouling layer is preferably 0.1 to 50 $\mu$m, and more preferably 0.2 to 20 $\mu$m. If the film thickness of the anti-fouling layer is less than 0.1 $\mu$m, the anti-fouling layer may not be able to impart uniform anti-fouling performance on the substrate. If the film thickness of the anti-fouling layer exceeds 50 $\mu$m, a larger amount of the anti-fouling agent is required in order to form the anti-fouling layer, and thus productivity may decrease.

The anti-fouling member of the present invention may also be provided with another layer for enhancing adhesiveness (an adhesive layer composed of components known to persons skilled in the art, for example) between the anti-fouling layer and the substrate. The other layer is preferably composed of a material having transparency to an extent that the transparency of the substrate is not significantly impaired. The film thickness of the other layer is not particularly limited, and an appropriate thickness may be selected by persons skilled in the art.

The anti-fouling member according to the present invention can be produced as follows, for example.

First, a pretreatment member having an uncured anti-fouling layer is produced by applying the coating composition of the present invention onto a substrate.

Here, if the coating composition does not contain water in advance, a uniform aqueous solution is prepared by adding water to dissolve the coating composition. If an aqueous solution of the coating composition is prepared in advance, the concentration may be adjusted by further adding water as needed. Also, if the coating composition does

not contain a cross-linking agent or a photopolymerization initiator, the cross-linking agent or the photopolymerization initiator may be added together with the coating composition when preparing this aqueous solution.

The content of water used to obtain an aqueous solution of the coating composition is not particularly limited, and is preferably 25 to 9,900 parts by mass, more preferably 100 to 3,000 parts by mass, and even more preferably 150 to 2,000 parts by mass, with respect to 100 parts by mass of the modified polyvinyl alcohol resin (A), for example. When the aqueous solution of the coating composition contains water in such a range, it is possible to provide this aqueous solution with appropriate viscosity stability and processibility, and to impart favorable anti-fouling performance to the cured product obtained by cross-linking the polyvinyl alcohol resin (A).

The coating composition can be applied onto the substrate, using a method known in the art, such as spray coating, roll coating, spin coating, air knife coating, blade coating, brush coating, or immersion, for example. After the coating composition is applied, the coating layer formed on the substrate may be dried as needed.

The pretreatment member having an uncured anti-fouling layer on the substrate is produced in this manner.

Then, the uncured anti-fouling layer of the pretreatment member is cured.

The uncured anti-fouling layer is cured by irradiating the uncured anti-fouling layer with high energy rays or electromagnetic waves, or by heating the uncured anti-fouling layer at a predetermined temperature. Examples of high energy rays include electron beams. Examples of electromagnetic waves include ultraviolet rays (UV light), visible light, and infrared rays. The temperature at which the substrate is heated is in a range of 50°C to 200°C, for example. In particular, it is preferable to use UV light because the modified polyvinyl alcohol resin (A) contained in the uncured anti-fouling layer can be cured in a more homogeneous state without requiring complicated equipment or the like. The uncured anti-fouling layer is irradiated with UV light not only emitted from a light source such as an ultraviolet lamp but also through sunlight by being exposed to the outdoors.

It is possible to obtain the anti-fouling member of the present invention in which the anti-fouling layer having a predetermined anti-fouling performance is formed on the substrate in this manner.

The anti-fouling member of the present invention may be used in applications such as exterior wall members for buildings and structures (e.g., exterior wall panels and windowpanes) and building interior members (e.g., wallpaper and mirrors); blades for wind power generators (e.g., propellers, multi-blades, and sails); outer cover members and inner cover members, windows, mirrors, and headlight covers for vehicles (e.g., automobiles and trains), aircraft, and ships; road traffic mirrors; security camera lenses and housings; digital camera lenses; broadcast camera lenses and housings; eyeglass lenses and frames; sunglass lenses and frames; goggles for sports or leisure (e.g., skiing, snowboarding, snorkeling, and scuba diving); helmets for industrial sites, sports, and motorcycles; and agricultural house constituent materials (e.g., plastic sheets, plastic films, and windowpanes).

The anti-fouling member of the present invention utilizes the water-resistant function of the cured product of the modified polyvinyl alcohol resin (A) contained in the anti-fouling layer, and even if contaminants such as dust, dirt, sand, and various organic substances (e.g., inks) are adhered to the anti-fouling layer of the anti-fouling member, it is possible to easily remove the contaminants from the surface of the anti-fouling member by utilizing an artificial operation such as wiping with water or a natural phenomenon such as rainfall, for example.

### (3) Binder for inorganic particles and laminate in which binder is used

#### (3-1) Binder for inorganic particles

The coating composition of the present invention can be used as a binder for inorganic particles for immobilizing inorganic particles (B1), for example.

The term "binder for inorganic particles" used in this specification refers to a composition by which a lump of substance can be formed as a result of inorganic particles (B1), which will be described later, being adhered, bonded, sticked, or adsorbed through physical or chemical action by curing a modified polyvinyl alcohol resin (A), which is a main component, the composition being in a state in which the modified polyvinyl alcohol resin (A) is uncured. Compositions having a structure in which the modified polyvinyl alcohol resin (A) has been already cured are excluded from the "binder for inorganic particles", for example.

If the coating composition of the present invention is used as a binder for inorganic particles, a coat is formed on the surfaces of at least some of the inorganic particles (B1), which will be described later, for example. Also, as a result of the modified polyvinyl alcohol resin (A) contained in the coating composition being cured, an inorganic particle-immobilized structure in which the inorganic particles (B1) are immobilized by the binder for inorganic particles is formed in the coat. Also, as a result of this inorganic particle-immobilized structure being formed on a predetermined substrate, a predetermined laminate is formed.

(3-2) Inorganic particle-immobilized structure

The term "inorganic particles" used in this specification refers to aggregates of substances that are composed of an inorganic material and are each individually present, and may have any shape such as a spherical shape, a perfectly spherical shape, a needle-like shape, a fibrous shape, a plate-like shape, or an amorphous shape, and examples of the material thereof include materials that can be generally used as inorganic fillers. The inorganic particles (B1) include nanofillers having an average particle size of 10 nm or more and less than 100 nm, microfillers having an average particle size of 100 nm or more and less than 10 μm, and macrofillers having an average particle size of 10 μm or more and 100 μm or less, for example.

Specific examples of the inorganic particles (B1) include, but are not necessarily limited to, bulking materials such as calcium carbonate, talc, silica, mica (layered silicate), and clay; reinforcing materials such as wollastonite, potassium titanate, xonotlite, gypsum fibers, aluminum borate, fibrous magnesium compounds ($MgSO_4$•$5Mg(OH)_2$•$3H_2O$ (MOS)), carbon fibers, glass fibers, talc, mica (layered silicate), and glass flakes; anti-bacterial agents made of silver-ion supported by zeolite and copper phthalocyanine; gas barrier agents made of synthetic mica and clay; weight reduction materials such as silica balloons, glass balloons, and Shirasu balloons; conductivity-imparting agents such as carbon black, graphite, carbon fibers, metal powder, metal fibers, and metal films; heat conductive agents such as alumina, aluminum nitride, boron nitride, and beryllia; piezoelectricity-imparting agents such as barium titanate and lead zirconate titanate; damping materials such as mica (layered silicate), graphite, potassium titanate, xonotlite, carbon fibers, and ferrite; sound insulation materials such as iron powder, lead powder, and barium sulfate; materials for imparting slidability, such as graphite, hexagonal BN, molybdenum sulfide, Teflon (registered trademark) powder, and talc; heat insulation imparting materials such as glass balloon and Shirasu balloon; electromagnetic wave absorbing agents such as ferrite, graphite, charcoal powder, carbon nanotubes, and lead zirconate titanate (PZT); light reflecting agents such as titanium oxide, glass beads, calcium carbonate, aluminum powder, and mica (layered silicate); heat ray radiating materials such as magnesium oxide, hydrotalcites, MOS, and alumina; flame-resistant agents such as antimony oxide, aluminum hydroxide, magnesium hydroxide, zinc borate, red phosphorus, zinc carbonate, hydrotalcites, and dawsonite; radiation shielding materials such as lead powder and barium sulfate; UV protection agents such as titanium oxide, zinc oxide, and iron oxide; dehumidifying materials such as calcium oxide and magnesium oxide; deodorants such as zeolite and activated clay; anti-blocking agents such as silica, mica (layered silicate), calcium carbonate, talc, and spherical minute particles; oil-absorbing materials such as marimo-like calcium carbonate and marimo-like xonotlite; water absorbing materials such as calcium oxide and magnesium oxide; and combinations thereof. Note that the inorganic particles (B1) may contain other components (e.g., organic substances) as long as they contain such inorganic substances and/or inorganic fibers. The inorganic particles (B1) include complexes of the inorganic substances and/or inorganic fibers and other components, and particles obtained by coating the inorganic substances and/or inorganic fibers with another component, using a method known in the technical art. In the present invention, in particular, silica, clay minerals (e.g., zeolite and talc), and mica (layered silicate) are more preferable because they are versatile and can be firmly immobilized by the cured product of the modified polyvinyl alcohol resin (A), which will be described later.

In order to obtain the inorganic particle-immobilized structure, the coating composition and the inorganic particles (B1) are mixed together in advance, and a composition for coating is produced.

The content of the inorganic particles (B1) in this composition for coating is preferably 3 parts by mass to 3,000 parts by mass, and more preferably 6 parts by mass to 1,500 parts by mass, with respect to 100 parts by mass of the modified polyvinyl alcohol resin (A) contained in the coating composition (the binder for inorganic particles). If the content of the inorganic particles (B1) is lower than 3 parts by mass, the physical properties of the modified polyvinyl alcohol resin (A) as a matrix become dominant, and the effect of adding the inorganic particles(B1) may not be obtained. If the content of the inorganic particles (B1) exceeds 3,000 parts by mass, the modified polyvinyl alcohol resin (A) contained in the coating composition may not be appropriately arranged between inorganic particles (B1), it may be difficult to form a homogeneous inorganic particle-immobilized structure, and the strength of the inorganic particle-immobilized structure obtained may decrease.

The inorganic particle-immobilized structure according to the present invention is formed as a result of the cured product of the coating composition being arranged between inorganic particles (B1) through curing of this composition for coating.

(3-3) Laminate and package

The laminate of the present invention includes a substrate and an inorganic particle-immobilized layer.

The substrate that may be included in the laminate may be colorless or colored. The substrate may also be a plate-shaped member having a smooth flat surface, or a molded body having a predetermined shape, for example.

Examples of the substrate that may be included in the laminate include, but are not particularly limited to, resin substrates, glass substrates, and paper substrates.

Examples of the resin substrates include substrates (e.g., films and sheets) made of thermoplastic resin or thermosetting resin such as polyethylene (PE) resin, polypropylene (PP) resin, polymethylmethacrylate (PMMA) resin, polyethylene terephthalate (PET) resin, polycarbonate (PC) resin, polyvinyl chloride (PVC) resin, polystyrene (PS) resin, alicyclic acrylic resin, alicyclic polyolefin resin, poly-4-methylterpene-1 resin, vinylidene chloride resin, or transparent epoxy resin.

Examples of the glass substrates include substrates made of float glass, tempered glass, heat-resistant glass, fireproof glass, design glass, colored glass, laminated glass, frosted glass, double-glazed glass, non-reflective glass, low-reflective glass, wire mesh glass, wired glass, high-transmission glass, heat reflective glass, electromagnetic wave shielding glass, and sapphire glass.

Examples of the paper substrates include printing/communication paper (e.g., high-grade printing paper having a whiteness of 75% or more, middle-grade printing paper having a whiteness of 55% or more and less than 75%, and low-grade printing paper having a whiteness of less than 55%), India paper, wood containing base paper, art paper, coat paper, cast coated paper, embossed paper, special printing paper, kraft paper, unbleached wrapping paper, bleached wrapping paper, building material bases, industrial laminates bases, adhesive and release paper bases, food boards, coated boards, capacitor tissue paper, press boards, liner and corrugating medium, manila boards, white lined chipboards, straw boards, chipboards, colored boards, waterproof boards, gypsum liner boards, core boards, mill wrappers, and the like.

The thickness of the substrate that may be included in the laminate is not particularly limited, and a substrate having an appropriate thickness may be selected as appropriate by persons skilled in the art. In order to improve adhesion to the inorganic particle-immobilized layer, for example, surface processing such as polishing may be performed on the side of the substrate where the inorganic particle-immobilized layer is provided, using a method known to persons skilled in the art.

With the laminate of the present invention, the inorganic particle-immobilized layer includes an inorganic particle-immobilized structure in which the cured product of the binder for inorganic particles of the present invention is disposed between inorganic particles (B1) as described above, and is provided on one surface of the substrate, for example.

The inorganic particle-immobilized layer is provided on the entire substrate at a substantially uniform thickness, for example. The film thickness of the inorganic particle-immobilized layer is preferably 0.1 to 50 $\mu$m, and more preferably 0.2 to 20 $\mu$m. If the film thickness of the inorganic particle-immobilized layer is less than 0.1 $\mu$m, it may be difficult to form a uniform layer. If the film thickness of the inorganic particle-immobilized layer exceeds 50 $\mu$m, a larger amount of the coating composition (the binder for inorganic particles) is required in order to form the inorganic particle-immobilized layer, leading to a decrease in productivity, and in addition, it may be difficult to uniformly cross-link the modified polyvinyl alcohol resin (A) to the inside of the inorganic particle-immobilized layer.

The laminate of the present invention may also be provided with another layer for enhancing adhesiveness (an adhesive layer composed of components known to persons skilled in the art, for example) between the substrate and the inorganic particle-immobilized layer. The film thickness of the other layer is not particularly limited, and an appropriate thickness may be selected by persons skilled in the art.

The laminate of the present invention can be produced as follows, for example.

First, a pretreatment member having a coating layer containing an uncured binder is produced by applying the coating composition and the composition for coating containing the inorganic particles (B1) onto a substrate.

Here, if the composition for coating to be used does not contain water in advance, it is preferable to complete the preparation of the composition for coating as a coating solution including a uniform aqueous solution of the coating composition by adding water to dissolve the binder for inorganic particles. If an aqueous solution of the coating composition is prepared in advance, the composition for coating may be produced by adjusting the concentration by further adding water as needed. Also, if the coating composition does not contain a cross-linking agent or a photopolymerization initiator, the cross-linking agent or the photopolymerization initiator may be added together with the coating composition at that time.

The content of water used to complete the preparation of the composition for coating is, but is not particularly limited to, preferably 250 to 9,900 parts by mass, and more preferably 400 to 3,000 parts by mass, with respect to 100 parts by mass of the modified polyvinyl alcohol resin (A), for example. When the composition for coating contains water in such a range, the composition for coating has an appropriate viscosity stabilizing effect, and the cured product obtained by cross-linking polyvinyl alcohol resin (A) in the coating solution can exhibit favorable binder performance on the inorganic particles (B1).

The composition for coating can be applied onto the substrate, using a method known in the art, such as spray coating, roll coating, spin coating, air knife coating, blade coating, brush coating, or immersion, for example. After the composition for coating is applied, the coating layer that is formed on the substrate and contains an uncured binder may be dried as needed.

The pretreatment member having the coating layer containing the uncured binder is produced on the substrate in this manner.

Then, the coating layer of the pretreatment member is cured.

The coating layer is cured by irradiating the uncured binder (the modified polyvinyl alcohol resin (A)) in the coating layer with high energy or electromagnetic waves, or heating the modified polyvinyl alcohol resin (A) at a predetermined temperature, for example. Examples of high energy rays include electron beams. Examples of electromagnetic waves include microwaves, ultraviolet rays (UV light), visible light, and infrared rays. The temperature at which the resin is heated is in a range of 50°C to 200°C, for example. In particular, it is preferable to use UV light because the modified polyvinyl alcohol resin (A) contained in the coating layer can be cured in a more homogeneous state without requiring complicated equipment or the like. The binder is irradiated with UV light not only emitted from a light source such as an ultraviolet lamp but also through sunlight by being exposed to the outdoors.

As a result, cross-linking of the modified polyvinyl alcohol resin (A) in the coating layer is facilitated, and the inorganic particle-immobilized layer, which includes the inorganic particle-immobilized structure in which the cured product of the modified polyvinyl alcohol resin (A) is disposed between the inorganic particles (B1) in the coating layer, is formed.

It is possible to obtain the laminate of the present invention in which the inorganic particle-immobilized layer is formed on the substrate in this manner.

The laminate of the present invention may be used as various laminate members according to applications of the contained inorganic particles, for example. If the gas barrier agent is used as the inorganic particles (B1), for example, the laminate of the present invention may be used as a film or sheet (gas barrier member) having gas barrier properties. Such a gas barrier member may be used to obtain a package obtained by enclosing an object to be packaged, such as foods (e.g., fresh foods or processed foods); electronic components; anaerobic chemical substances; or the like, for example.

(4) Resin composition for providing anti-bacterial properties and anti-bacterial product in which resin composition is used

(4-1) Resin composition for providing anti-bacterial properties

The coating composition of the present invention may be used as a resin composition for providing a substrate (may be referred to as an "anti-bacterial resin composition" hereinafter) with anti-bacterial properties by adding an anti-bacterial component (B2) to the coating composition, for example.

There is no particular limitation on the anti-bacterial component (B2), and known anti-bacterial agents can be used. Note that an agent, which exhibits a bactericidal effect against pathogenic bacteria represented by *Staphylococcus aureus* and *Escherichia coli,* for example, is suitably used as an anti-bacterial agent.

Examples of the anti-bacterial component (B2) include anti-bacterial components containing silver, inorganic anti-bacterial components that do not contain silver, organic anti-bacterial components, and natural anti-bacterial components, and combinations thereof.

There is no particular limitation on the type of anti-bacterial components containing silver as long as they contain silver (silver atoms). Also, the form of silver is not particularly limited, and silver may be contained in a form such as silver metal, silver ion, or silver salt.

Examples of silver salts include silver acetate, silver acetylacetonate, silver azide, silver acetylide, silver arsenate, silver benzoate, silver hydrogen fluoride, silver bromate, silver bromide, silver carbonate, silver chloride, silver chlorate, silver chromate, silver citrate, silver cyanate, silver cyanide,

(cis,cis-1,5-cyclooctadiene)-1,1,1,5,5,5-(hexafluoroacetylacetonato)silver, silver diethyldithiocarbamate, silver (I) fluoride, silver (II) fluoride, 7,7-dimethyl-1,1,1,2,2,3,3-heptafluoro-4,6-(octanedionato)silver, silver hexafluoroantimonate, silver hexafluoroarsenate, silver hexafluorophosphate, silver iodate, silver iodide, silver isothiocyanate, potassium silver cyanide, silver lactate, silver molybdate, silver nitrate, silver nitrite, silver oxide (I), silver oxide (II), silver oxalate, silver perchlorate, silver perfluorobutyrate, silver perfluoropropionate, silver permanganate, silver perrhenate, silver phosphate, silver picrate monohydrate, silver propionate, silver selenate, silver selenide, silver selenite, silver sulfadiazine, silver sulfate, silver sulfide, silver sulfite, silver telluride, silver tetrafluoroborate, silver tetraiodomercurate, silver tetratungstate, silver thiocyanate, silver p-toluenesulfonate, silver trifluoromethanesulfonate, silver trifluoroacetate, and silver vanadate.

Also, examples of the silver complex, which is a form of silver salt, include a silver complex with histidine, a silver complex with methionine, a silver complex with cysteine, a silver complex with aspartic acid, a silver complex with pyrrolidonecarboxylic acid, a silver complex with oxotetrahydrofuran carboxylic acid, and a silver complex with imidazole.

Examples of the inorganic anti-bacterial component that does not contain silver include compounds containing metals other than silver such as copper-containing compounds such as metallic copper and copper oxides, gold-containing compounds such as metallic gold and gold oxides, lead-containing compounds such as metallic lead and lead oxides, platinum-containing compounds such as metallic platinum and platinum oxide, nickel-containing compounds such as metallic nickel and nickel oxides, aluminum-containing compounds such as metallic aluminum and aluminum

oxides, tin-containing compounds such as metallic tin and tin oxides, zinc-containing compounds such as metallic zinc and zinc oxides, iron-containing compounds such as metallic iron and iron oxides, bismuth-containing compounds such as metallic bismuth and bismuth oxides, and ammonium salt-containing inorganic compounds.

Examples of the organic anti-bacterial component include phenol ether derivatives, imidazole derivatives, sulfone derivatives, N-haloalkylthio compounds, anilide derivatives, pyrrole derivatives, ammonium salt-containing organic compounds, pyridine-based compounds, triazine-based compounds, benzoisothiazolin-based compounds, and isothiazolin-based compounds.

Although there is no particular limitation on the types of ammonium salt-containing inorganic compounds and ammonium salt-containing organic compounds, quaternary ammonium salts are particularly preferable. Examples of the ammonium salt-containing inorganic compound include ammonium chloride, ammonium nitrate, and ammonium sulfate. Examples of the ammonium salt-containing organic compound include ammonium formate, ammonium acetate, benzalkonium chloride, alkyldiaminoethylglycine hydrochloride, and ammonium salt-containing polymers. Examples of the ammonium salt-containing polymer include salts of an amino group-containing resin typified by a dimethylaminoethyl methacrylate polymer, and resin having an ammonium salt-containing monomer typified by a diallyldimethylammonium chloride polymer as a structural unit. The neutralized product of chitosan, which will be described later, is also an aspect of the salt of the amino group-containing resin.

Examples of the natural anti-bacterial component include chitosan, which is a basic polysaccharide obtained through hydrolysis of chitin contained in the shells and the like of crustaceans such as crabs, shrimp, and the like, for example. A commercially available chitosan can be used.

Chitosan is preferably used in the form of acid neutralized product. Appropriate water solubility can be imparted through neutralization, and chitosan can be easily blended with the modified polyvinyl alcohol resin (A) in the coating composition in an aqueous solution state, for example. Chitosan can be neutralized with inorganic acids such as hydrochloric acid, nitric acid, phosphoric acid, sulfuric acid, boric acid, and hydrofluoric acid, and organic acids such as carboxylic acids, sulfonic acids, and phenols, for example. Examples of the carboxylic acids include formic acid, acetic acid, anhydrous acetic acid, propionic acid, butanoic acid, decanoic acid, oleic acid, lactic acid, benzoic acid, phthalic acid, oxalic acid, adipic acid, acounitic acid, pyruvic acid, and amino acids. In particular, dicarboxylic acid and monocarboxylic acids having 1 to 3 carbon atoms are preferable. Adipic acid and acetic acid are more preferable. The degree of neutralization of chitosan is preferably 50 mol% or more, more preferably 70 mol% or more, and even more preferably 90 mol% or more, and may be 100 mol%. The degree of neutralization of chitosan may be 95 mol% or less, or 80 mol% or less.

Preferred examples of the anti-bacterial component (B2) include high molecular weight compounds having a molecular weight of 1,000 or more, water-insoluble inorganic compounds, and water-insoluble low-molecular-weight organic compounds, and combinations thereof. In particular, from the viewpoint of being able to uniformly disperse the anti-bacterial component (B2) in an aqueous solution, the anti-bacterial component (B2) is preferably any one of a high molecular weight compound having a molecular weight of 1,000 or more, a water-insoluble inorganic compound, and combinations thereof.

If the coating composition of the present invention is used as an anti-bacterial resin composition, a mass ratio (A/B2) between the modified polyvinyl alcohol resin (A) and the anti-bacterial component (B2) contained in the coating composition is, but is not particularly limited to, preferably 99/1 to 30/70, more preferably 98/2 to 40/60, even more preferably 95/5 to 50/50, and particularly preferably 90/10 to 60/40. When the modified polyvinyl alcohol resin (A) and the anti-bacterial component (B2) are contained in such a mass ratio range, an anti-bacterial resin composition to be obtained can easily form a cross-linked structure in the presence of a predetermined cross-linking agent or by applying active energy rays without requiring complicated cross-linking operation.

(4-2) Cured product

If the coating composition of the present invention is used as an anti-bacterial resin composition, it is possible to facilitate the cross-linking of the modified polyvinyl alcohol resin (A), which is a constituent component in the coating composition, through irradiation with high energy rays or electromagnetic waves, or through heating, and thus to obtain the cured product (cross-linked product) of the coating composition. This cured product is also an embodiment of the present invention. With the cured product, it is preferable that the modified polyvinyl alcohol resin (A) and the anti-bacterial component (B2) that are contained in the anti-bacterial resin composition are chemically or physically integrated through cross-linking based on the constitutional unit represented by Formula (I) above that is included in the modified polyvinyl alcohol resin (A). The cured product obtained in this manner can exhibit water resistance and anti-bacterial properties. With the coating composition of the present invention, a cross-linking reaction can proceed by using high energy rays or the like as a trigger without using mutagenic compound such as glutaraldehyde.

The cured product of the present invention has high water resistance. The degree of such water resistance can be evaluated by measuring the dissolution ratio of the obtained cross-linked product, for example.

The dissolution ratio of the cured product is calculated as follows: First, the mass (W1) of a predetermined cross-linked product (cured product) at the (untreated) stage where evaluation is started is measured, the mass (W2) of this cross-linked product obtained after the cross-linked product is vacuum-dried at 80°C for 24 hours is then measured, and a solid content (TS) of the cross-linked product is calculated based on W1 and W2 according to the following equation:

$$TS\ (mass\%) = 100 \times W2\ /\ W1.$$

Thereafter, a predetermined cross-linked product at the (untreated) stage where evaluation is started is immersed in boiling water for 1 hour, removed from water, and vacuum-dried at 80°C for 24 hours, and then the mass (W3) is measured, and thus the dissolution ratio can be calculated using W1, TS, and W3 that were ultimately obtained above according to the following equation:

$$Dissolution\ ratio\ (mass\%) = 100 - \{W3\ /\ (W1 \times TS\ /\ 100)\} \times 100.$$

The dissolution ratio of the cured product is preferably 40 mass% or less, more preferably 35 mass% or less, even more preferably 30 mass% or less, and most preferably 25 mass% or less. Because the cured product in the present invention satisfies the above-described dissolution ratio range, the elution of the constituent components is prevented before and after the immersion in the boiling water. In other words, it can be understood that the cured product has high water resistance to the water due to the dissolution being prevented.

The cured product of the present invention can be produced using the anti-bacterial resin composition as follows, for example.

First, a case where the anti-bacterial resin composition contains a photopolymerization initiator together with the modified polyvinyl alcohol resin (A) and the anti-bacterial component (B2) will be described.

In such a case, the anti-bacterial resin composition (the coating composition) is irradiated with active energy rays such as α-rays, γ-rays, electron beams, i-rays, or UV light, and the composition is suitably irradiated with UV light.

UV-light irradiation conditions are not necessarily limited because they vary depending on the amount of the anti-bacterial resin composition used and the content of the constituents thereof, and appropriate irradiation conditions (e.g., irradiation intensity and irradiation time) may be selected as appropriate by persons skilled in the art. The anti-bacterial resin composition may be irradiated with UV light continuously or intermittently.

A predetermined cross-linked product (cured product) is formed due to the anti-bacterial resin composition being irradiated with UV light, and thus the anti-bacterial resin composition being chemically or physically integrated through cross-linking based on the constitutional unit represented by Formula (I) above that is included in the modified polyvinyl alcohol resin (A) contained in this anti-bacterial resin composition.

The cured product of the present invention can be obtained in this manner. This corresponds to a production method including a step of cross-linking an anti-bacterial resin composition by irradiating the anti-bacterial resin composition with active energy rays.

Next, a case where the anti-bacterial resin composition contains a cross-linking agent as well as the modified polyvinyl alcohol resin (A) and the anti-bacterial component (B2) will be described.

In such a case, the anti-bacterial resin composition is heated. Heating conditions are not necessarily limited because they vary depending on the amount of the anti-bacterial resin composition used and the content of the constituents thereof, and appropriate heating conditions (e.g., the heating temperature and heating time) may be selected as appropriate by persons skilled in the art. The anti-bacterial resin composition may be heated continuously or intermittently.

A predetermined cross-linked product (cured product) is formed due to the anti-bacterial resin composition being heated, and thus the anti-bacterial resin composition being chemically or physically integrated through cross-linking based on the constitutional unit represented by Formula (I) above that is included in the modified polyvinyl alcohol resin (A) contained in this composition.

The cured product of the present invention can be obtained in this manner. This corresponds to a production method including a step of cross-linking an anti-bacterial resin composition by heating the anti-bacterial resin composition.

The cured product of the present invention is not particularly limited, and may be molded into any molded body such as a sheet or film, for example. Examples of a method for molding a cured product include a method for disposing the anti-bacterial resin composition in a mold with a desired shape and cross-linking the composition, and a method for cross-linking the anti-bacterial resin composition in a state in which the anti-bacterial resin composition is applied onto another substrate. The thickness of the cured product is not particularly limited, and is preferably 10 to 1,000 μm, and is more preferably 50 to 80 μm. When the thickness of the cured product is in this range, the water resistance and

handleability of the obtained molded product are improved.

(4-3) Anti-bacterial product

The cured product of the present invention can be, but is not particularly limited to, used as an anti-bacterial product by utilizing the improved anti-bacterial properties and water resistance. The cured product can be used as a material to be included in various products such as hygiene products (e.g., diapers and sanitary products), medical products (e.g., dressing materials for protecting a wound), agricultural and horticultural materials (e.g., soil water retention agents, seedling raising sheets, and seed coating materials), food packaging materials (e.g., freshness-keeping films, dew condensation prevention sheets, and barrier coating materials), pet-related products (e.g., pet sheets and cat litter), electrical materials (e.g., water blocking materials for communication cables, building materials (e.g., dew condensation prevention wallpaper), sanitary materials (e.g., bathroom items, toiletries, and toilet items), and kitchen materials, for example.

In this manner, the coating composition of the present invention can be used for various applications as described above based on the versatility of the modified polyvinyl alcohol resin (A) having the ethylenically unsaturated group in the side chain, which is a constituent component.

Examples

Although the present invention will be described below in detail using examples, the present invention is not limited to these examples. Note that, unless otherwise stated, "%" and "parts" in examples and comparative examples respectively refer to "mass%" and "parts by mass".

Example I: Production and evaluation of anti-fog agent

Calculation of modification ratio

$^1$H-NMR of the modified polyvinyl alcohol resins obtained in Examples I-1 to I-8 or Comparative Examples I-1 and 1-2 was measured at room temperature using the nuclear magnetic resonance apparatus "LAMBDA 500" manufactured by JEOL Ltd., and the modification ratios thereof were calculated based on the integral values of peaks (5.0 to 7.5 ppm) derived from the olefin protons. With Example I-1, which will be described later, the modification ratio was calculated based on the integral values of the peaks derived from the olefin protons present at 5.6 ppm and 6.0 ppm, for example.

Water absorption ratio of cured product of modified polyvinyl alcohol resin (A)

A PET film with a thickness of 100 μm that was subjected to corona treatment was coated with the anti-fog agent stock solutions obtained in Examples I-9 to 1-17 or Comparative Examples I-3 to 1-5, using a bar coater, such that the thickness of the dried coats was 20 μm. Then, after the resulting films were subjected to cross-linking treatment using a predetermined method, and were dried at 100°C for 30 minutes so as to obtain anti-fog coated films. The obtained anti-fog coated films were immersed in pure water for 3 hours at room temperature (25°C), and the mass ($W_i1$) thereof after the films were removed from water and water was wiped off from the surfaces thereof was measured. Then, the films were vacuum-dried at 80°C for 24 hours, and then the mass (Wi2) of the resulting films was measured. The water absorption ratio of the cured products was calculated according to the following equation, using those values $W_i1$ and $W_i2$, mass ($W_i3$), which was obtained after only a PET film of a substrate whose mass was premeasured was immersed in pure water at room temperature (25°C) for 3 hours and was removed from water, and water was wiped off from the surface thereof, and mass ($W_i4$), which was obtained after the resulting film was vacuum-dried at 80°C for 24 hours, and the calculated water absorption ratio was used as an index of a water absorption property. Note that the higher the water absorption ratio is, the further the water absorption property is improved.

$$\text{Water absorption ratio (fold)} = (W_i1 - W_i3) / (W_i2 - W_i4)$$

Evaluation of anti-fog properties

An opening in a 200 mL-beaker in which 100 mL of warm water at a temperature of 40°C was introduced was covered by the anti-fog coated film, which was obtained in Examples I-9 to 1-17 or Comparative Examples 1-3 to 1-5, or an uncoated film, and the beaker was left for 1 hour in an atmosphere at 40°C, and the haze of the anti-fog coated

film was then measured using a haze meter (HAZE METER NDH 5000 manufactured by Nippon denshoku industries Co., Ltd.). The anti-fog properties were evaluated according to the following criteria based on the haze values.

A: the haze value was less than 10
B: the haze value was in a range of 10 to 40
C: the haze value was 40 or more

Evaluation of anti-fog persistence

The anti-fog coated films obtained in Examples 1-9 to 1-17 or Comparative Examples 1-3 to 1-5, or an uncoated film was immersed in water at 50°C for 1 week and dried at 80°C for 30 minutes so as to obtain the treated anti-fog coated films. Then, an opening in a 200 mL-beaker in which 100 mL of warm water at 40°C was covered by the treated anti-fog coated film, the beaker was left for 1 hour in an atmosphere at 40°C, and the haze value of the treated anti-fog coated film was measured using the haze meter in the same manner as above. The anti-fog persistence was evaluated according to the following criteria based on the haze values.

A: the haze value was less than 10
B: the haze value was in a range of 10 to 40
C: the haze value was 40 or more

Viscosity stability of anti-fog agent stock solution

The anti-fog agent stock solutions obtained in Examples 1-9 to I-17 or Comparative Examples I-4 to I-5 were left at 20°C for 1 day from the date on which a test was started (test starting date), and the resulting solutions were re-mixed using a precision dispersion/emulsion machine "CLEARMIX" manufactured by M Technique Co., Ltd. at a rotational speed of 6,400 rpm for 10 minutes while being sheared by a jet flow, and then were left at 20°C for 1 day again. Thereafter, the operation in which the mixture was left for 1 day, remixed, and left for 1 day was repeated, and the ratio (thickening ratio =$\eta_{7\text{-day}}/\eta_{initial}$) between the viscosity 7 days after the test starting date ($\eta_{7\text{-day}}$) and the initial viscosity at 20°C ($\eta_{initial}$) was obtained and evaluated according to the following criteria. Note that the entire container containing the anti-fog agent stock solution was covered with aluminum foil while the container was left so as to shield the container from light. The viscosity was measured at 20°C using a type-B viscometer (having a rotational speed of 12 rpm) according to the rotational viscometer method in accordance with JIS K 6726 (1994).

A: $\eta_{7\text{-day}}/\eta_{initial}$ was 1 or more and less than 5.
B: $\eta_{7\text{-day}}/\eta_{initial}$ was 5 or more and less than 10.
C: $\eta_{7\text{-day}}/\eta_{initial}$ was 10 or more, or the composition lost fluidity and was gelled.

Example I-1: Production of anti-fog agent ($E_i1$)

510.3 parts by mass of methacrylic acid, 24.0 parts by mass of acetic acid, 28.4 parts by mass of ion-exchanged water, 1.3 parts by mass of p-methoxyphenol, and 8.1 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 95 mol%) was added while the mixture was being stirred at room temperature, and the temperature was raised to 65°C while the mixture was being stirred so that a reaction proceeded for 1 hour in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-1". The results of evaluation of the obtained "$PVOH_i$-1" are shown in Table 1. This "$PVOH_i$-1" was used as an anti-fog agent ($E_i1$) in examples, which will be described later.

Example 1-2: Production of anti-fog agent ($E_i2$)

476.3 parts by mass of methacrylic acid, 62.4 parts by mass of acetic acid, 28.4 parts by mass of ion-exchanged water, 1.3 parts by mass of p-methoxyphenol, and 9.1 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 300 and a degree of saponification of 82 mol%) was added while the mixture was being stirred at room temperature, and the temperature was raised to 65°C while the mixture was being stirred so that a reaction proceeded for 2.8 hours in a slurry state. Then,

the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-2". The results of evaluation of the obtained "$PVOH_i$-2" are shown in Table 1. This "$PVOH_i$-2" was used as an anti-fog agent (Ei2) in examples, which will be described later.

Example I-3: Production of anti-fog agent (Ei3)

510.3 parts by mass of 4-pentenoic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 60°C while the mixture was being stirred so that a reaction proceeded for 3 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-3". The results of evaluation of the obtained "$PVOH_i$-3" are shown in Table 1. This "$PVOH_i$-3" was used as an anti-fog agent (Ei3) in examples, which will be described later.

Example I-4: Production of anti-fog agent ($E_i$4)

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 90°C while the mixture was being stirred so that a reaction proceeded for 3 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-4". The results of evaluation of the obtained "$PVOH_i$-4" are shown in Table 1. This "$PVOH_i$-4" was used as an anti-fog agent ($E_i$4) in examples, which will be described later.

Example I-5: Production of anti-fog agent ($E_i$5)

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 2,400 and a degree of saponification of 98.5 mol%) was added while the mixture was being stirred at room temperature, and the temperature was raised to 90°C while the mixture was being stirred so that a reaction proceeded for 10 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-5". The results of evaluation of the obtained "$PVOH_i$-5" are shown in Table 1. This "$PVOH_i$-5" was used as an anti-fog agent ($E_i$5) in examples, which will be described later.

Example 1-6: Production of anti-fog agent ($E_i$6)

499.0 parts by mass of methacrylic acid, 39.7 parts by mass of acetic acid, 28.4 parts by mass of ion-exchanged water, 1.3 parts by mass of p-methoxyphenol, and 3.4 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 2,400 and a degree of saponification of 88 mol%) was added while the mixture was being stirred at room temperature, and the temperature was raised to 75°C while the mixture was being stirred so that a reaction proceeded for 2.5 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-6". The results of evaluation of the obtained "$PVOH_i$-6" are shown in Table 1. This "$PVOH_i$-6" was used as an anti-fog agent ($E_i$6) in examples, which will be described later.

Example I-7: Production of anti-fog agent ($E_i7$)

493.3 parts by mass of acrylic acid, 17.0 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 65°C while the mixture was being stirred so that a reaction proceeded for 10 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-7". The results of evaluation of the obtained "$PVOH_i$-7" are shown in Table 1. This "PVOH-7" was used as an anti-fog agent (E7) in examples, which will be described later.

Example I-8: Production of anti-fog agent ($E_i8$)

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 500 and a degree of saponification of 98.5 mol%) was added while the mixture was being stirred at room temperature, and the temperature was raised to 90°C while the mixture was being stirred so that a reaction proceeded for 5 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_i$-8". The results of evaluation of the obtained "$PVOH_i$-8" are shown in Table 1. This "$PVOH_i$-8" was used as an anti-fog agent ($E_i8$) in examples, which will be described later.

Comparative Example I-1: Production of anti-fog agent ($C_i1$)

A commercially available polyvinyl alcohol resin (having a number-average degree of polymerization of 1,700 and a degree of saponification of 98.5 mol%) was directly used as an unmodified polyvinyl alcohol resin "$PVOH_i$-9". This "$PVOH_i$-9" was used as an anti-fog agent ($C_i1$) in comparative examples, which will be described later.

Comparative Example 1-2: Production of anti-fog agent ($C_i2$)

A 3-methacrylamidopropyltrimethoxysilane modified polyvinyl alcohol "$PVOH_i$-10" was obtained according to the method described in Example 6 disclosed in Patent Document 1 (JP 2014-101439A). The results of evaluation of the obtained "$PVOH_i$-10" are shown in Table 1. This "$PVOH_i$-10" was used as an anti-fog agent ($C_i2$) in comparative examples, which will be described later.

[Table 1]

| | Name of Anti-Fog Agent | Modified Polyvinyl Alcohol Resin | | | | |
|---|---|---|---|---|---|---|
| | | Name | Number Average Molecular Weight | Vinyl Alcohol Unit (mol%) | Ethylenically Unsaturated Group Introduced into Side Chain | Modification Ratio (mol%) |
| Example I-1 | $E_i1$ | $PVOH_i$-1 | 43000 | 94.9 | Methacryloyl Group | 0.1 |
| Example I-2 | $E_i2$ | $PVOH_i$-2 | 13000 | 81.3 | Methacryloyl Group | 0.7 |
| Example I-3 | $E_i3$ | $PVOH_i$-3 | 75000 | 96.1 | Acyl group derived from 4-Pentenoic acid | 3.8 |
| Example I-4 | $E_i4$ | $PVOH_i$-4 | 74000 | 97 | Methacryloyl Group | 1.5 |

(continued)

| | Name of Anti-Fog Agent | Modified Polyvinyl Alcohol Resin | | | | |
|---|---|---|---|---|---|---|
| | | Name | Number Average Molecular Weight | Vinyl Alcohol Unit (mol%) | Ethylenically Unsaturated Group Introduced into Side Chain | Modification Ratio (mol%) |
| Example I-5 | $E_i5$ | $PVOH_i$-5 | 106000 | 92.8 | Methacryloyl Group | 5.2 |
| Example I-6 | $E_i6$ | $PVOH_i$.6 | 105600 | 87.5 | Methacryloyl Group | 0.5 |
| Example I-7 | $E_i7$ | $PVOH_i$-7 | 74800 | 95.7 | Acryloyl Group | 2.8 |
| Example I-8 | $E_i8$ | $PVOH_i$-8 | 23000 | 95.5 | Methacryloyl Group | 2.5 |
| Comparative Example I-1 | $C_i1$ | $PVOH_i$-9 | 74800 | 98.5 | - | - |
| Comparative Example I-2 | $C_i2$ | $PVOH_i$-10 | 105700 | 97.4 | Silanol Group | 1.0 |

Example 1-9: Production of anti-fog coated film ($DE_i1$)

The anti-fog agent ($E_i1$) obtained in Example I-1 was dissolved in water to prepare a 10% aqueous solution, 2-hydroxy-4'-(2-hydroxyethoxy)-2-methylpropiophenone was added and dissolved as a photoinitiator so as to achieve 1 part by mass with respect to 100 parts by mass of "$PVOH_i$-1" constituting the anti-fog agent ($E_i1$), and thus an anti-fog agent stock solution was prepared.

A PET film with a thickness of 100 μm that was subjected to corona treatment was coated with this anti-fog agent stock solution, using a bar coater, such that the thickness of the dried coat was 20 μm. Then, the coated film was dried at 25°C for 1 week under conditions of 50% RH and was irradiated with ultraviolet rays at an intensity of 3,000 $mJ/cm^2$ so as to subject "$PVOH_i$-1" cross-linking treatment and dried at 80°C for 30 minutes, and thus an anti-fog coated film ($DE_i1$) was obtained. The results of evaluation of this anti-fog coated film ($DE_i1$) are shown in Table 2.

Example I-10: Production of anti-fog coated film ($DE_i2$)

An anti-fog agent stock solution was prepared in the same manner as in Example I-9, except that the anti-fog agent ($E_i2$) obtained in Example 1-2 was used instead of the anti-fog agent ($E_i1$) obtained in Example I-1, and an anti-fog coated film ($DE_i2$) was obtained in the same manner as in Example 1-9 using this anti-fog agent stock solution. The results of evaluation of this anti-fog coated film ($DE_i2$) are shown in Table 2.

Example I-11: Production of anti-fog coated film ($DE_i3$)

An anti-fog agent stock solution was prepared in the same manner as in Example 1-9, except that the anti-fog agent ($E_i3$) obtained in Example 1-3 was used instead of the anti-fog agent ($E_i1$) obtained in Example I-1, and an anti-fog coated film ($DE_i3$) was obtained in the same manner as in Example 1-9, except that this anti-fog agent stock solution was used, and the intensity of ultraviolet rays with which the coated surface was irradiated was changed to 10,000 $mJ/cm^2$ without drying the coated surface at 25°C for 1 week under the conditions of 50% RH. The results of evaluation of this anti-fog coated film ($DE_i3$) are shown in Table 2.

Example 1-12: Production of anti-fog coated film ($DE_i4$)

An anti-fog agent stock solution was prepared in the same manner as in Example 1-9, except that the anti-fog agent ($E_i4$) obtained in Example 1-4 was used instead of the anti-fog agent ($E_i1$) obtained in Example I-1, and an anti-fog coated film (DEi4) was obtained in the same manner as in Example 1-9, except that this anti-fog agent stock solution was used, and the anti-fog coated film was not dried at 25°C for 1 week under the conditions of 50% RH. The results of

evaluation of this anti-fog coated film ($DE_i4$) are shown in Table 2.

Note that in this example, when the above-described anti-fog properties were evaluated, the anti-fog coated film ($DE_i4$) placed on a beaker were photographed at the test starting time (0 min) and 5 minutes after the test was started. The results thereof are shown in FIG. 1.

Example 1-13: Production of anti-fog coated film ($DE_i5$)

An anti-fog agent stock solution was prepared in the same manner as in Example 1-9, except that the anti-fog agent ($E_i5$) obtained in Example I-5 was used instead of the anti-fog agent ($E_i1$) obtained in Example I-1, and an anti-fog coated film ($DE_i5$) was obtained in the same manner as in Example 1-9, except that this anti-fog agent stock solution was used, and the anti-fog coated film was not dried at 25°C for 1 week under the conditions of 50% RH. The results of evaluation of this anti-fog coated film ($DE_i5$) are shown in Table 2.

Example I-14: Production of anti-fog coated film ($DE_i6$)

An anti-fog agent stock solution was prepared in the same manner as in Example 1-9, except that the anti-fog agent ($E_i6$) obtained in Example I-6 was used instead of the anti-fog agent ($E_i1$) obtained in Example I-1, and an anti-fog coated film ($DE_i6$) was obtained in the same manner as in Example 1-9, except that this anti-fog agent stock solution was used, and a coated surface was irradiated with an electron beam (EB) at 30 kGy, instead of ultraviolet rays. The results of evaluation of this anti-fog coated film ($DE_i6$) are shown in Table 2.

Example 1-15: Production of anti-fog coated film ($DE_i7$)

The anti-fog agent stock solution was prepared in the same manner as in Example 1-9, except that the anti-fog agent ($E_i7$) obtained in Example I-7 was used instead of the anti-fog agent ($E_i1$) obtained in Example I-1, and an anti-fog coated film ($DE_i7$) was obtained in the same manner as in Example 1-9 using this anti-fog agent stock solution. The results of evaluation of this anti-fog coated film ($DE_i7$) are shown in Table 2.

Example 1-16: Production of anti-fog coated film ($DE_i8$)

An anti-fog agent stock solution was prepared in the same manner as in Example 1-9, except that the anti-fog agent ($E_i8$) obtained in Example I-8 was used instead of the anti-fog agent ($E_i1$) obtained in Example 1-1, and an anti-fog coated film ($DE_i8$) was obtained in the same manner as in Example 1-9, except that this anti-fog agent stock solution was used, and the anti-fog coated film was not dried at 25°C for 1 week under the conditions of 50% RH. The results of evaluation of this anti-fog coated film ($DE_i8$) are shown in Table 2.

Example I-17: Production of anti-fog coated film ($DE_i9$)

3.0 parts by mass of ion-exchanged water was added to 1.4 parts by mass of an aqueous solution of polyacrylic acid ("168-07375", which is 25% aqueous solution manufactured by FUJIFILM Wako Pure Chemical Corporation), 0.154 parts by mass of an 8 N aqueous solution of KOH was added, and the resulting mixture was sufficiently mixed until it became uniform. Then, 8.2 parts by mass of a 10% aqueous solution, which was prepared by dissolving the anti-fog agent ($E_i4$) obtained in Example I-4 in water, was added to this mixture, and the resulting mixture was mixed until it became uniform. 0.01 parts by mass of 2-hydroxy-4'-(2-hydroxyethoxy)-2-methylpropiophenone was added and dissolved as a photoinitiator, and an anti-fog agent stock solution containing "$PVOH_i$-4" contained in the anti-fog agent ($E_i4$) and polyacrylic acid (with a degree of neutralization of 20 mol%) in a mass ratio of 7 : 3 was obtained.

A PET film with a thickness of 100 μm that was subjected to corona treatment was coated with this anti-fog agent stock solution, using a bar coater, such that the thickness of the dried coat was 20 μm. Then, the coated surface was irradiated with ultraviolet rays at an intensity of 3,000 mJ/$cm^2$ so as to subject "$PVOH_i$-4" to cross-linking treatment, and was dried at 80°C for 30 minutes, and thus an anti-fog coated film (DEi9) was obtained. The results of evaluation of this anti-fog coated film ($DE_i9$) are shown in Table 2.

Comparative Example I-3: Production of uncoated film ($NC_i1$)

An uncoated film ($NC_i1$) to which an anti-fog agent was not applied was obtained in the same manner as in Example I-9, except that an anti-fog agent stock solution containing the anti-fog agent ($E_i1$) obtained in Example I-1 was not used. The results of evaluation of this uncoated film ($NC_i1$) are shown in Table 2.

Comparative Example I-4: Production of anti-fog coated film ($DC_i1$)

An anti-fog agent stock solution was prepared in the same manner as in Example I-9, except that the anti-fog agent ($C_i1$) obtained in Comparative Example I-1 was used instead of the anti-fog agent ($E_i1$) obtained in Example I-1, and an anti-fog coated film ($DC_i1$) was obtained in the same manner as in Example I-9, except that this anti-fog agent stock solution was used, and the anti-fog coated film was not dried at 25°C for 1 week under the conditions of 50% RH. The results of evaluation of this anti-fog coated film ($DC_i1$) are shown in Table 2.

Note that in this comparative example, when the above-described anti-fog properties were evaluated, the anti-fog coated film ($DC_i1$) placed on a beaker were photographed at the test starting time (0 min) and 5 minutes after the test was started. The results thereof are shown in FIG. 1.

Comparative Example I-5: Production of anti-fog coated film ($DC_i2$)

An anti-fog agent stock solution was prepared in the same manner as in Example I-9, except that the anti-fog agent ($C_i2$) obtained in Comparative Example I-2 was used instead of the anti-fog agent ($E_i1$) obtained in Example I-1, and an anti-fog coated film ($DC_i2$) was obtained in the same manner as in Example I-9, except that this anti-fog agent stock solution was used, and the PET film coated with the anti-fog agent stock solution was subjected to heat treatment at 100°C for 5 minutes, instead of the coated surface being irradiated with ultraviolet rays. The results of evaluation of this anti-fog coated film ($DC_i2$) are shown in Table 2.

[Table 2]

| | Anti-Fog Agent | Anti-Fog Agent Stock Solution | | Crosslinking | | Water Absorption Ratio | Anti-Fog Properties | Anti-Fog Persistence |
|---|---|---|---|---|---|---|---|---|
| | | Type | I Viscosity Stability | Type | Condition | | | |
| Example I-9 | $E_i1$ | Mixed solution of $PVOH_i$-1 and Photoinitiator | A | Uv Irradiated | 3000mJ/cm$^2$ | 18.3 | A | B |
| Example I-10 | $E_i2$ | Mixed solution of $PVOH_i$-2 and Photoinitiator | A | Uv Irradiated | 3000mJ/cm$^2$ | 9.5 | A | B |
| Example I-11 | $E_i3$ | Mixed solution of $PVOH_i$-3 and Photoinitiator | A | Uv Irradiated | 10000mJ/cm$^2$ | 8.5 | A | B |
| Example I-12 | $E_i4$ | Mixed solution of $PVOH_i$-4 and Photoinitiator | A | Uv Irradiated | 3000mJ/cm$^2$ | 9.5 | A | A |
| Example I-13 | $E_i5$ | Mixed solution of $PVOH_i$-6 and Photoinitiator | B | Uv Irradiated | 3000mJ/cm$^2$ | 9.0 | A | A |
| Example I-14 | $E_i6$ | $PVOH_i$-6 Solution | A | Eb Irradiated | 30kGy | 2.5 | A | A |
| Example I-15 | $E_i7$ | Mixed solution of $PVOH_i$-7 and Photoinitiator | B | Uv Irradiated | 3000mJ/cm$^2$ | 1.8 | A | A |
| Example I-16 | $E_i8$ | Mixed solution of $PVOH_i$-8 and Photoinitiator | A | Uv Irradiated | 3000mJ/cm$^2$ | 12.5 | A | A |
| Example I-17 | $E_i4$ | Mixed solution of $PVOH_i$-4,Partially Neutralized Polyacrylic Acid and Photoinitiator | A | Uv Irradiated | 3000mJ/cm$^2$ | 85.5 | A | A |
| Comparative Example I-3 | - | - | - | Uv Irradiated | 3000mJ/cm$^2$ | - | C | C |
| Comparative Example I-4 | $C_i1$ | Mixed solution of $PVOH_i$-9 and Photoinillator | A | Uv Irradiated | 3000mJ/cm$^2$ | - | B | C |
| Comparative Example I-5 | $C_i2$ | $PVOH_i$-10 Solution | C | Heat Treated | 100°C,5min. | 4.0 | A | A |

As shown in Table 2, it is found that all of the anti-fog coated films ($DE_i1$) to ($DE_i9$) produced in Examples I-9 to I-17 had good anti-fog properties and anti-fog persistence, and had anti-fog performance that was equivalent to or better than that of the anti-fog coated film ($DC_i2$) produced in Comparative Example I-5. On the other hand, it is also found that the anti-fog agent stock solution prepared in Comparative Example I-5 contained 3-methacrylamidopropyltrimethoxysilane modified polyvinyl alcohol resin ($PVOH_i$-10) as the constituent component thereof, whereas the anti-fog agent stock solutions prepared in Examples I-9 to I-17 contained the modified polyvinyl alcohol resin having a predetermined ethylenically unsaturated group (Table 1) in the side chain, and thus viscosity stability was significantly improved.

Note that as is clear from the results of Comparative Example I-3, the uncoated film that did not have an anti-fog layer containing an anti-fog agent was rapidly fogged up, whereas when a non-modified vinyl alcohol-based polymer was used as in Comparative Example I-4, it cannot be cross-linked with high energy rays or the like and is not water resistant, and thus, the obtained anti-fog layer had low durability, and had poor anti-fog properties and anti-fog persistence. Also, an anti-fog agent in which a silyl group-containing vinyl alcohol-based polymer such as in Comparative Example I-5 was used had favorable anti-fog properties and anti-fog persistence due to it being highly cross-linked and having water resistance, whereas a cross-linking reaction started to proceed immediately after the solution was prepared, and thus the solution needs to be handled carefully in terms of the viscosity stability of the solution.

Also, as shown in FIG. 1, with the anti-fog coated films ($DE_i4$) and ($DC_i1$) produced in Example I-12 and Comparative Example I-4, no haze occurred on the lower surfaces (indicated by black arrows) of the films immediately after the test was started, and those films were transparent (FIGS. 1(a) and 1(b)). In contrast, it is found that, as indicated by a white arrow in FIG. 1(d), with the anti-fog coated film ($DC_i1$) produced in Comparative Example I-4, haze occurred on the lower surface of the film 5 minutes after the test was started, and the visibility from the upper surface to the lower surface of the film was lost (FIG. 1(d)). In contrast, it is found that as shown in FIG. 1(b), with the anti-fog coated film (DEi4) produced in Example 14, no haze occurred on the lower surface (indicated by the black arrow) of the film even 5 minutes after the test was started, and a substantially transparent state was maintained, and favorable anti-fog performance was exhibited.

Example II: Production and evaluation of anti-fouling agent Calculation of modification ratio

$^1$H-NMR of the modified polyvinyl alcohol resins obtained in Examples II-1 to II-8 or Comparative Example 1 at room temperature was measured using the nuclear magnetic resonance apparatus "LAMBDA 500" manufactured by JEOL Ltd., and the modification ratios thereof were calculated based on the integral values of peaks (5.0 to 7.5 ppm) derived from the olefin protons. With Example II-1, which will be described later, the modification ratio was calculated based on the integral values of the peaks derived from the olefin protons present at 5.6 ppm and 6.0 ppm, for example.

Evaluation of anti-fouling properties (oil-based ink) and solvent resistance

An oil-based black ink ("Mitsubishi Marker" manufactured by Mitsubishi Pencil Co., Ltd.) was applied to the anti-fouling coated films or uncoated films obtained in Examples II-9 to II-17 or Comparative Examples II-2 to II-4, the films were left for 24 hours, the surfaces thereof were rinsed with benzine heated to 40°C, and the anti-fouling properties and solvent resistance (surface roughness) were evaluated based on the surface states according to the following criteria.

Anti-fouling properties

A: No dirt remained.
B: An unnoticeable amount of dirt remained.
C: Dirt obviously remained.

Solvent resistance (surface roughness)

A: The surface was also barely rough.
B: The surface was rough to an extent that roughness was not noticeable.
C: The surface was obviously rough.

Evaluation of anti-fouling properties (CRAY-PAS) and water resistance

A red Cray-pas (manufactured by SAKURA COLOR PRODUCTS CORPORATION) was applied to the anti-fouling coated films or uncoated films obtained in Examples II-9 to II-17 or Comparative Examples II-2 to II-4, the films were left for 24 hours, the surfaces thereof were rinsed with water in which a synthetic kitchen detergent ("Mama Lemon" manufactured by Lion Corporation) was dissolved and that was warmed to 40°C, and the anti-fouling properties and

water resistance (surface roughness) were evaluated based on the surface states according to the following criteria.

Anti-fouling properties

A: No dirt remained.
B: An unnoticeable amount of dirt remained.
C: Dirt obviously remained.

Water resistance (surface roughness)

A: The surface was also barely rough.
B: The surface was rough to an extent that roughness was not noticeable.
C: The surface was obviously rough.

Viscosity stability of anti-fouling agent stock solution

The anti-fouling agent stock solutions obtained in Examples II-9 to II-17 or Comparative Examples II-2 to II-4 were left at 20°C for 1 day from the date when the test was started, and the resulting solutions were re-mixed using the precision dispersion/emulsion machine "CLEARMIX" manufactured by M Technique Co., Ltd. at a rotational speed of 6,400 rpm for 10 minutes while being sheared by a jet flow, and then were left at 20°C for 1 day again. Thereafter, the operation in which the mixture was left for 1 day, remixed, and left for 1 day was repeated, and the ratio (thickening ratio $=\eta_{7\text{-day}}/\eta_{initial}$) between the viscosity 7 days after the test starting date ($\eta_{7\text{-day}}$) and the initial viscosity at 20°C ($\eta_{initial}$) was obtained and evaluated according to the following criteria. Note that the entire container containing the anti-fouling agent stock solution was covered with aluminum foil while the container was left so as to shield the container from light. The viscosity was measured at 20°C using a type-B viscometer (having a rotational speed of 12 rpm) according to the rotational viscometer method in accordance with JIS K 6726 (1994).

A: $\eta_{7\text{-day}}/\eta_{initial}$ was 1 or more and less than 5.
B: $\eta_{7\text{-day}}/\eta_{initial}$ was 5 or more and less than 10.
C: $\eta_{7\text{-day}}/\eta_{initial}$ was 10 or more, or the composition lost fluidity and was gelled.

Example II-1: Production of anti-fouling agent ($E_{ii}1$)

510.3 parts by mass of methacrylic acid, 24.0 parts by mass of acetic acid, 28.4 parts by mass of ion-exchanged water, 1.3 parts by mass of p-methoxyphenol, and 8.1 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 95 mol%) was added while the mixture was being stirred at room temperature, and the temperature was raised to 65°C while the mixture was being stirred such that a reaction proceeded for 1 hour in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{ii}$-1". The results of evaluation of the obtained "$PVOH_{ii}$-1" are shown in Table 3. This "$PVOH_{ii}$-1" was used as an anti-fouling agent ($E_{ii}1$) in examples, which will be described later.

Example II-2: Production of anti-fouling agent (Eii2)

476.3 parts by mass of methacrylic acid, 62.4 parts by mass of acetic acid, 28.4 parts by mass of ion-exchanged water, 1.3 parts by mass of p-methoxyphenol, and 9.1 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 300 and a degree of saponification of 82 mol%) was added while the mixture was being stirred at room temperature, and the temperature was raised to 65°C while the mixture was being stirred so that a reaction proceeded for 2.8 hour in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{ii}$-2". The results of evaluation of the obtained "$PVOH_{ii}$-2" are shown in Table 3. This "$PVOH_{ii}$-2" was used as an anti-fouling agent ($E_{ii}2$) in examples, which will be described later.

Example II-3: Production of anti-fouling agent (Eii3)

510.3 parts by mass of 4-pentenoic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 60°C while the mixture was being stirred so that a reaction proceeded for 3 hour in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{ii}$-3". The results of evaluation of the obtained "$PVOH_{ii}$-3" are shown in Table 3. This "$PVOH_{ii}$-3" was used as an anti-fouling agent ($E_{ii}$3) in examples, which will be described later.

Example II-4: Production of anti-fouling agent ($E_{ii}$4)

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 90°C while the mixture was being stirred so that a reaction proceeded for 3 hour in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{ii}$-4". The results of evaluation of the obtained "$PVOH_{ii}$-4" are shown in Table 3. This "$PVOH_{ii}$-4" was used as an anti-fouling agent ($E_{ii}$4) in examples, which will be described later.

Example II-5: Production of anti-fouling agent ($E_{ii}$5)

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 2,400 and a degree of saponification of 98.5 mol%) was added while the mixture was being stirred at room temperature, and the temperature was raised to 90°C while the mixture was being stirred so that a reaction proceeded for 10 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{ii}$-5". The results of evaluation of the obtained "$PVOH_{ii}$-5" are shown in Table 3. This "$PVOH_{ii}$-5" was used as an anti-fouling agent ($E_{ii}$5) in examples, which will be described later.

Example II-6: Production of anti-fouling agent ($E_{ii}$6)

499.0 parts by mass of methacrylic acid, 39.7 parts by mass of acetic acid, 28.4 parts by mass of ion-exchanged water, 1.3 parts by mass of p-methoxyphenol, and 3.4 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 2,400 and a degree of saponification of 88 mol%) was added while the mixture was being stirred at room temperature, and the temperature was raised to 75°C while the mixture was being stirred so that a reaction proceeded for 2.5 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{ii}$-6". The results of evaluation of the obtained "$PVOH_{ii}$-6" are shown in Table 3. This "$PVOH_{ii}$-6" was used as an anti-fouling agent ($E_{ii}$6) in examples, which will be described later.

Example II-7: Production of anti-fouling agent ($E_{ii}$7)

493.3 parts by mass of acrylic acid, 17.0 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree

of saponification of 98.5 mol%) was added while the mixture was being stirred at room temperature, and the temperature was raised to 65°C while the mixture was being stirred so that a reaction proceeded for 10 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{ii}$-7". The results of evaluation of the obtained "$PVOH_{ii}$-7" are shown in Table 3. This "$PVOH_{ii}$-7" was used as an anti-fouling agent ($E_{ii}$7) in examples, which will be described later.

Example II-8: Production of anti-fouling agent ($E_{ii}$8)

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 500 and a degree of saponification of 98.5 mol%) was added while the mixture was being stirred at room temperature, and the temperature was raised to 90°C while the mixture was being stirred so that a reaction proceeded for 5 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3Pa for 20 hours so as to obtain a modified polyvinyl alcohol resin "$PVOH_{ii}$-8". The results of evaluation of the obtained "$PVOH_{ii}$-8" are shown in Table 3. This "$PVOH_{ii}$-8" was used as an anti-fouling agent ($E_{ii}$8) in examples, which will be described later.

Comparative Example II-1: Production of anti-fouling agent ($C_{ii}$1)

A commercially available polyvinyl alcohol resin (having a number-average degree of polymerization of 1,700 and a degree of saponification of 98.5 mol%) was directly used as an unmodified polyvinyl alcohol resin, and was used as "$PVOH_{ii}$-9". This "$PVOH_{ii}$-9" was used as an anti-fouling agent (Ciil) in comparative examples, which will be described later.

[Table 3]

| | Name of Anti-Fouling Agent | Modified Polyvinyl Alcohol Resin | | | | |
|---|---|---|---|---|---|---|
| | | Name | Number Average Molecular Weight | Vinyl Alcohol Unit (mol%) | Ethylenically Unsaturated Group Introduced into Side Chain | Modification Rate (mol%) |
| Example II-1 | $E_{ii}$1 | $PVOH_{ii}$-1 | 43000 | 94.9 | Methacryloyl Group | 0.1 |
| Example II-2 | $E_{ii}$2 | $PVOH_{ii}$-2 | 13000 | 81.3 | Methacryloyl Group | 0.7 |
| Example II-3 | $E_{ii}$3 | $PVOH_{ii}$-3 | 75000 | 96.1 | Acyl group derived from 4-Pentenoic acid | 3.8 |
| Example II-4 | $E_{ii}$4 | $PVOH_{ii}$-4 | 74000 | 97 | Methacryloyl Group | 1.5 |
| Example II-5 | $E_{ii}$5 | $PVOH_{ii}$-5 | 106000 | 92.8 | Methacryloyl Group | 5.2 |
| Example II-6 | $E_{ii}$6 | $PVOH_{ii}$-6 | 105600 | 87.5 | Methacryloyl Group | 0.5 |
| Example II-7 | $E_{ii}$7 | $PVOH_{ii}$-7 | 74800 | 95.7 | Acryloyl Group | 2.8 |
| Example II-8 | $E_{ii}$8 | $PVOH_{ii}$-8 | 23000 | 95.5 | Methacryloyl Group | 2.5 |
| Comparative Example II-1 | $C_{ii}$1 | $PVOH_{ii}$-9 | 74800 | 98.5 | - | - |

Example II-9: Production of anti-fouling coated film ($FE_{ii}1$)

The anti-fouling agent ($E_{ii}1$) obtained in Example II-1 was dissolved in water to prepare a 10% aqueous solution, 2-hydroxy-4'-(2-hydroxyethoxy)-2-methylpropiophenone was added and dissolved as a photoinitiator so as to achieve 1 part by mass with respect to 100 parts by mass of "$PVOH_{ii}$-1" constituting the anti-fouling agent ($E_{ii}1$), and thus an anti-fouling agent stock solution was prepared.

A PET film with a thickness of 100 μm that was subjected to corona treatment was coated with this anti-fouling agent stock solution, using a bar coater, such that the thickness of the dried coat was 20 μm. Then, the coated surface was irradiated with ultraviolet rays at an intensity of 3,000 $mJ/cm^2$ so as to subject "$PVOH_{ii}$-1" to cross-linking treatment, and was dried at 80°C for 30 minutes, and thus an anti-fouling coated film ($FE_{ii}1$) was obtained. The results of evaluation of this anti-fouling coated film ($FE_{ii}1$) are shown in Table 4.

Example II-10: Production of anti-fouling coated film ($FE_{ii}2$)

An anti-fouling agent stock solution was prepared in the same manner as in Example II-9, except that the anti-fouling agent ($E_{ii}2$) obtained in Example II-2 was used instead of the anti-fouling agent ($E_{ii}1$) obtained in Example II-1, and an anti-fouling coated film ($FE_{ii}2$) was obtained using this anti-fouling agent stock solution in the same manner as in Example II-9. The results of evaluation of this anti-fouling coated film ($FE_{ii}2$) are shown in Table 4.

Example II-11: Production of anti-fouling coated film ($FE_{ii}3$)

An anti-fouling agent stock solution was prepared in the same manner as in Example II-9, except that the anti-fouling agent ($E_{ii}3$) obtained in Example II-3 was used instead of the anti-fouling agent ($E_{ii}1$) obtained in Example II-1, and an anti-fouling coated film (FEii3) was obtained in the same manner as in Example II-9, except that this anti-fouling agent stock solution was used and the intensity of the ultraviolet rays with which the coated surface was irradiated was changed to 10,000 $mJ/cm^2$. The results of evaluation of this anti-fouling coated film (FEii3) are shown in Table 4.

Example II-12: Production of anti-fouling coated film (FEii4)

An anti-fouling agent stock solution was prepared in the same manner as in Example II-9, except that the anti-fouling agent ($E_{ii}4$) obtained in Example II-4 was used instead of the anti-fouling agent ($E_{ii}1$) obtained in Example II-1, and an anti-fouling coated film ($FE_{ii}4$) was obtained using this anti-fouling agent stock solution in the same manner as in Example II-9. The results of evaluation of this anti-fouling coated film ($FE_{ii}4$) are shown in Table 4.

Example II-13: Production of anti-fouling coated film ($DE_{ii}5$)

An anti-fouling agent stock solution was prepared in the same manner as in Example II-9, except that the anti-fouling agent ($E_{ii}5$) obtained in Example II-5 was used instead of the anti-fouling agent ($E_{ii}1$) obtained in Example II-1, and an anti-fouling coated film ($FE_{ii}5$) was obtained using this anti-fouling agent stock solution in the same manner as in Example II-9. The results of evaluation of this anti-fouling coated film ($FE_{ii}5$) are shown in Table 4.

Example II-14: Production of anti-fouling coated film ($FE_{ii}6$)

An anti-fouling agent stock solution was prepared in the same manner as in Example II-9, except that the anti-fouling agent ($E_{ii}6$) obtained in Example II-6 was used instead of the anti-fouling agent ($E_{ii}1$) obtained in Example II-1, and an anti-fouling coated film ($FE_{ii}6$) was obtained in the same manner as in Example II-9, except that this anti-fouling agent stock solution was used and the coated surface was irradiated with an electron beam (EB) at 30 kGy instead of ultraviolet rays. The results of evaluation of this anti-fouling coated film ($FE_{ii}6$) are shown in Table 4.

Example II-15: Production of anti-fouling coated film ($FE_{ii}7$)

An anti-fouling agent stock solution was prepared in the same manner as in Example II-9, except that the anti-fouling agent ($E_{ii}7$) obtained in Example II-7 was used instead of the anti-fouling agent ($E_{ii}1$) obtained in Example II-1, and an anti-fouling coated film ($FE_{ii}7$) was obtained using this anti-fouling agent stock solution in the same manner as in Example II-9. The results of evaluation of this anti-fouling coated film ($FE_{ii}7$) are shown in Table 4.

Example II-16: Production of anti-fouling coated film ($FE_{ii}8$)

An anti-fouling agent stock solution was prepared in the same manner as in Example II-9, except that the anti-fouling agent ($E_{ii}8$) obtained in Example II-8 was used instead of the anti-fouling agent ($E_{ii}1$) obtained in Example II-1, and an anti-fouling coated film ($FE_{ii}8$) was obtained using this anti-fouling agent stock solution in the same manner as in Example II-9. The results of evaluation of this anti-fouling coated film ($FE_{ii}8$) are shown in Table 4.

Example II-17: Production of anti-fouling coated film ($FE_{ii}9$)

3.0 parts by mass of ion-exchanged water was added to 1.4 parts by mass of an aqueous solution of polyacrylic acid ("168-07375", which is a 25% aqueous solution manufactured by FUJIFILM Wako Pure Chemical Corporation), 0.154 parts by mass of an 8 N aqueous solution of KOH was added, and the resulting mixture was sufficiently mixed until it became uniform. Then, 8.2 parts by mass of a 10% aqueous solution, which was prepared by dissolving the anti-fouling agent ($E_{ii}4$) obtained in Example II-4 in water, was added to this mixture, and the resulting mixture was mixed until it became uniform. 0.01 parts by mass of 2-hydroxy-4'-(2-hydroxyethoxy)-2-methylpropiophenone was added and dissolved as a photoinitiator, and an anti-fouling agent stock solution containing "$PVOH_{ii}$-4" contained in the anti-fouling agent ($E_{ii}4$) and polyacrylic acid (with a degree of neutralization of 20 mol%) in a mass ratio of 7 : 3 was obtained.

A PET film with a thickness of 100 μm that was subjected to corona treatment was coated with this anti-fouling agent stock solution, using a bar coater, such that the thickness of the dried coat was 20 μm. Then, the coated surface was irradiated with ultraviolet rays at an intensity of 3,000 $mJ/cm^2$ so as to subject "$PVOH_{ii}$-4" to cross-linking treatment, and was dried at 80°C for 30 minutes, and thus an anti-fouling coated film ($FE_{ii}9$) was obtained. The results of evaluation of this anti-fouling coated film ($FE_{ii}9$) are shown in Table 4.

Comparative Example II-2: Production of uncoated film ($NC_{ii}1$)

An uncoated film ($NC_{ii}1$) to which an anti-fouling agent was not applied was obtained in the same manner as in Example II-9, except that an anti-fouling agent stock solution containing the anti-fouling agent ($E_{ii}1$) obtained in Example II-1 was not used. The results of evaluation of this uncoated film ($NC_{ii}1$) are shown in Table 4.

Comparative Example II-3: Production of anti-fouling coated film ($FC_{ii}1$)

An anti-fouling agent stock solution was prepared in the same manner as in Example II-9, except that the anti-fouling agent ($C_{ii}1$) obtained in Comparative Example I-1 was used instead of the anti-fouling agent ($E_{ii}1$) obtained in Example I-1, and an anti-fouling coated film ($FC_{ii}1$) was obtained using this anti-fouling agent stock solution in the same manner as in Example II-9. The results of evaluation of this anti-fouling coated film ($FC_{ii}1$) are shown in Table 4.

Comparative Example II-4: Production of anti-fouling coated film ($FC_{ii}2$)

A 10% aqueous solution was prepared by dissolving the anti-fouling agent ($C_{ii}1$) obtained in Comparative Example II-1 in water. An anti-fouling agent stock solution was prepared by adding 1.8 parts by mass of a 25 mass% aqueous solution of glutaraldehyde (111-30-8 manufactured by FUJIFILM Wako Pure Chemical Corporation) to 40 parts by mass of this aqueous solution, and further adding 9.5 parts by mass of a 47% aqueous solution of sulfuric acid (193-08705 manufactured by FUJIFILM Wako Pure Chemical Corporation).

An anti-fouling coated film ($FC_{11}2$) was obtained in the same manner as in Example II-9, except that this anti-fouling agent stock solution was used, and the PET film coated with the anti-fouling agent stock solution was subjected to heat treatment at 100°C for 5 minutes, instead of irradiating the coated surface with ultraviolet rays. The results of evaluation of this anti-fouling coated film ($FC_{ii}2$) are shown in Table 4.

[Table 4]

| | Anti-Fouling Agent | Anti-Fouling Agent Stock Solution | | Crosslinking | | Anti-Fouling Property | Solvent Resistance | Anti-Fouling Property | Water Resistance |
|---|---|---|---|---|---|---|---|---|---|
| | | Type | Viscosity Stability | Type | Condition | Black Ink | Surface Roughness | Red Cray-pas | Surface Roughness |
| Example II-9 | $E_{ii}1$ | Mixed solution of $PVOH_{ii}$-1 and Photoinitiator | A | UV Irradiated | 3000mJ/cm$^2$ | A | A | A | B |
| Example II-10 | $E_{ii}2$ | Mixed solution of $PVOH_{ii}$-2 and Photoinitiator | A | UV Irradiated | 3000mJ/cm$^2$ | A | A | A | B |
| Example II-11 | $E_{ii}3$ | Mixed solution of $PVOH_{ii}$-3 and Photoinitiator | A | UV Irradiated | 10000mJ/cm$^2$ | A | A | A | B |
| Example II-12 | $E_{ii}4$ | Mixed solution of $PVOH_{ii}$-4 and Photoinitiator | A | UV Irradiated | 3000mJ/cm$^2$ | A | A | A | A |
| Example II-13 | $E_{ii}5$ | Mixed solution of $PVOH_{ii}$-5 and Photoinitiator | B | UV Irradiated | 3000mJ/cm$^2$ | A | A | A | A |
| Example II-14 | Eii6 | $PVO_{ii}H$-6 Solution | A | Eb Irradiated | 30kGy | A | A | A | A |
| Example II-15 | $E_{ii}7$ | Mixed solution of $PVOH_{ii}$-7 and Photoinitiator | B | UV Irradiated | 3000mJ/cm$^2$ | A | A | A | A |
| Example II-16 | $E_{ii}8$ | Mixed solution of $PVOH_{ii}$-8 and Photoinitiator | A | UV Irradiated | 3000mJ/cm$^2$ | A | A | A | A |
| Example II-17 | $E_{ii}4$ | Mixed solution of $PVOH_{ii}$-4, Partially Neutralized Polyacrylic Acid and Photoinitiator | A | UV Irradiated | 3000mJ/cm$^2$ | B | A | B | B |
| Comparative Example II-2 | - | - | - | UV Irradiated | 3000mJ/cm$^2$ | C | A | C | A |
| Comparative Example II-3 | $C_{ii}1$ | Mixed solution of $PVOH_{ii}$-9 and Photoinitiator | A | UV Irradiated | 3000mJ/cm$^2$ | A | A | A | C |
| Comparative Example II-4 | $C_{ii}1$ | Mixed Solution of $PVOH_{ii}$-9 and Glutaraldehyde Sulfuric Acid | C | Heat Treated | 100 °C,5 min. | A | A | B | A |

As shown in Table 4, it is found that all of the anti-fouling coated films ($FE_{ii}1$) to ($FE_{ii}9$) produced in Examples II-9 to II-17 had better anti-fouling performance than the uncoated film ($NC_{ii}1$) produced in Comparative Example II-2, and had higher water resistance than the anti-fouling coated film ($FC_{ii}1$) produced in Comparative Example II-3. Also, it is found that the viscosity stability of the anti-fouling agent stock solutions prepared in Examples II-9 to II-17 was

significantly improved compared to the anti-fouling agent stock solution prepared in Comparative Example II-4.

Note that, as with Comparative Example II-2, the film that did not have an anti-fouling layer clearly had poor anti-fouling properties, and when a non-modified polyvinyl alcohol resin is used as in Comparative Example II-3, it cannot be cross-linked with high energy rays or the like and is not water resistant, and thus the obtained anti-fouling layer had low water resistance, and the surface thereof was rough when it was washed with water. Furthermore, it is found that, when a liquid mixture of a polyvinyl alcohol resin, an aldehyde cross-linking agent, and an acid as in Comparative Example II-4 is used, the resin is highly cross-linked and has water resistance, whereas a cross-linking reaction starts to proceed immediately after an anti-fouling agent solution was prepared, and thus the solution has extremely low viscosity stability, and practical uses will be limited, assuming that anti-fouling properties are imparted through coatings, films, or the like at the sites where such coatings, films, or the like are used.

In contrast, the anti-fouling coated films ($FE_{ii}1$) to ($FE_{ii}9$) produced in Examples II-9 to II-17 obtained using the anti-fouling agents ($E_{ii}1$) to ($E_{ii}8$) produced in Examples II-1 to II-8 can be easily used by operators without the concerns as with the above-described comparative examples. Also, when such an anti-fouling coated film is produced, use of alcohol is not required, and thus the safety of operators can be improved and environmental loads can also be reduced.

Example II-18

The anti-fouling agent ($E_{ii}4$) obtained in Example I-4 was dissolved in water to prepare a 10% aqueous solution, 2-hydroxy-4'-(2-hydroxyethoxy)-2-methylpropiophenone was added and dissolved as a photoinitiator so as to achieve 1 part by mass with respect to 100 parts by mass of "$PVOH_{ii}$-4" constituting the anti-fouling agent (Eii4), and thus an anti-fouling agent stock solution was prepared. A PET film with a thickness of 100 μm that was subjected to corona treatment was coated with this anti-fouling agent stock solution, using a bar coater, such that the thickness of the dried coat was 20 μm. Then, the coated surface was irradiated with ultraviolet rays at an intensity of 3,000 $mJ/cm^2$ so as to subject "$PVOH_{ii}$-4" to cross-linking treatment, and was dried at 80°C for 30 minutes, and thus an anti-fouling coated film was obtained.

An oil-based black ink ("Mitsubishi Marker" manufactured by Mitsubishi Pencil Co., Ltd.) was applied to this anti-fouling coated film, the film was left for 24 hours, the surface thereof was wiped with a wipe impregnated with water, and the black ink was completely removed, and the surface was not rough at all.

Example III: Production and evaluation of inorganic particle binder

Calculation of modification ratio in modified polyvinyl alcohol resin

$^1$H-NMR of the modified polyvinyl alcohol resins obtained in Examples III-1 to III-6 or Comparative Example III-2 was measured using the nuclear magnetic resonance apparatus "LAMBDA 500" manufactured by JEOL Ltd. at room temperature in deuterated dimethyl sulfoxide. The content of the vinyl alcohol unit was calculated from the peaks (3.1 to 4.0 ppm) derived from methyl protons on the main chain of the vinyl alcohol unit. With Examples III-1 to III-3 and III-6, the content of the structural unit of the modified site introduced into the side chain was also calculated based on the integral values of the peaks (5.0 to 7.5 ppm) derived from the olefin protons. With Example III-5, the content of the structural unit of the modified site introduced into the side chain was also calculated based on the integral value of the peak (3.3 ppm) derived from methylene adjacent to the primary alcohol of 1,2-diol.

Measurement of number average molecular weight (Mn)

The number average molecular weights (Mn) of the modified polyvinyl alcohol resin or unmodified polyvinyl alcohol resin obtained in Examples III-1 to III-6 and Comparative Examples III-1 and III-2 were measured using a size exclusion high performance liquid chromatography device "HLC-8320GPC" manufactured by Tosoh Corporation under the following measurement conditions. Note that the numerical values shown in Table 5 are values obtained by rounding off the hundreds digits of the measured values.

Column: Two HFIP columns "GMHHR-H(S)" connected in series manufactured by Tosoh Corporation
Standard sample: Polymethyl methacrylate
Solvent and mobile phase: Solution of sodium trifluoroacetate-HFIP (with a concentration of 20 mM)
Flow rate: 0.2 mL/min
Temperature: 40°C
Sample solution concentration: 0.1 wt% (filtration with a filter with an opening diameter of 0.45 μm)
Injection amount: 10 pL
Detector: RI

Viscosity stability of coating solution

The coating solutions obtained in Examples III-7 to III-17 or Comparative Examples III-3 and III-4 were left at 20°C for 1 day from the date when the test was started, and the resulting solutions were re-mixed using the precision dispersion/emulsion machine "CLEARMIX" manufactured by M Technique Co., Ltd. at a rotational speed of 6,400 rpm for 10 minutes while being sheared by a jet flow, and then were left at 20°C for 1 day again. Thereafter, the operation in which the mixture was left for 1 day, remixed, and left for 1 day was repeated, and the ratio (thickening ratio =$\eta_{7\text{-day}}/\eta_{initial}$) between the viscosity 7 days after the test starting date ($\eta_{7\text{-day}}$) and the initial viscosity at 20°C ($\eta_{initial}$) was obtained and evaluated according to the following criteria. Note that the entire container containing the coating solution was covered with aluminum foil while the container was left so as to shield the container from light. The viscosity was measured at 20°C using a type-B viscometer (having a rotational speed of 12 rpm) according to the rotational viscometer method in accordance with JIS K 6726 (1994).

A: $\eta_{7\text{-day}}/\eta_{initial}$ was 1 or more and less than 5.
B: $\eta_{7\text{-day}}/\eta_{initial}$ was 5 or more and less than 10.
C: $\eta_{7\text{-day}}/\eta_{initial}$ was 10 or more, or the composition lost fluidity and was gelled.

Evaluation of water resistance

The single-layer cured films obtained in Examples III-7 to III-17 or Comparative Examples III-3 and III-4 were immersed in deionized water at 20°C for 24 hours, removed therefrom, and vacuum-dried at 40°C for 12 hours, and then the mass ($W_{iii}$l) was measured. The dissolution ratio was calculated according to the following equation based on the obtained mass ($W_{iii}1$) and the mass ($W_{iii}2$), which was pre-measured before the immersion. Then, this dissolution ratio was used as an index of the water resistance of the cured film. Note that, if a portion of an evaluation film was dissolved during immersion in water, the shape thereof collapsed, and dispersion of the contained inorganic substances toward the boiling water side was visually confirmed, an evaluation was made as "unmeasurable" (mentioned as "-" in Table 6).

$$\text{Dissolution ratio (mass\%)} = 100 \times ([W_{iii}2] - [W_{iii}1]) / [W_{iii}2]$$

Evaluation of OTR

The humidity of gas barrier members (laminates) obtained in Examples III-18 to III-20 or Comparative Examples III-5 and III-6 was adjusted for 3 days under the conditions of 20°C and 85% RH, and the oxygen transmission rate (ORT) thereof was measured using an oxygen transmission rate measuring device (OX-TORAN MODEL 2/21 manufactured by Mocon) under the same conditions. Note that the values shown in Table 6 are values obtained by converting the thickness of the coating layers (gas barrier layers) into 20 μm.

Temperature: 20°C
Humidity on oxygen supply side: 85% RH
Humidity on carrier gas side: 85% RH
Oxygen pressure: 1.0 atm
Carrier gas pressure: 1.0 atm

Example III-1: Production of binder for inorganic particles ($E_{iii}1$)

450 parts by mass of dimethyl sulfoxide and 450 parts by mass of methylmetacrylate were fed into the reactor provided with a stirrer, a reflux tube, and an addition port, and 100 parts by mass of a polyvinyl alcohol resin (PVA25-100 manufactured by Kuraray Co., Ltd. and having a degree of saponification of 99.9 mol% or more), 1.8 parts by mass of sodium acetate, 2 parts by mass of phenothiazine were added while the mixture was being stirred at room temperature, and the resulting mixture was stirred at 80°C to obtain a slurry solution. A reaction was started by raising the temperature to 100°C after 1 hour, the reaction proceeded for 4 hours, and the mixture was cooled to room temperature and filtered through a polyethylene terephthalate mesh (with an opening of 56 μm). 10 parts of undried and filtered resin and 50 parts of methanol were introduced into a screw tube, stirred using a stirrer for 10 minutes, and cleaned. The used methanol was replaced with new methanol, the same operation was repeated, the resulting mixture was filtered and dried by a vacuum dryer at 40°C and 1.3 Pa overnight, and thus a modified polyvinyl alcohol resin "$PVOH_{iii}$-A" having a methacryloyl group in the side chain was obtained. The results of evaluation of the obtained "$PVOH_{iii}$-A" are shown

in Table 5. This "$PVOH_{iii}$-A" was used as a binder for inorganic particles ($E_{iii}1$) in examples, which will be described later.

Example III-2: Production of binder for inorganic particles ($E_{iii}2$)

A modified polyvinyl alcohol resin "$PVOH_{iii}$-B" having a methacryloyl group in the side chain was obtained in the same manner as in Example III-1, except that a reaction was started by raising the temperature to 100°C 1 hour after a slurry solution was prepared in the same manner as in Example III-1, the reaction proceeded for 8 hours, and the solution was cooled to room temperature. The results of evaluation of the obtained "$PVOH_{iii}$-B" are shown in Table 5. This "$PVOH_{iii}$-B" was used as a binder for inorganic particles ($E_{iii}2$) in examples, which will be described later.

Example III-3: Production of binder for inorganic particles ($E_{iii}3$)

A slurry solution was prepared in the same manner as in Example III-1, except that 100 parts by mass of the polyvinyl alcohol resin (PVA60-98 manufactured by Kuraray Co., Ltd. and having a degree of saponification of 98.5 mol%) was used. Then, a modified polyvinyl alcohol resin "$PVOH_{iii}$-C" having a methacryloyl group in the side chain was obtained in the same manner as in Example III-1, except that a reaction was started by raising the temperature to 100°C 1 hour after the slurry solution was prepared, the reaction proceeded for 1.5 hours, and the solution was cooled to room temperature. The results of evaluation of the obtained "$PVOH_{iii}$-C" are shown in Table 5. This "$PVOH_{iii}$-C" was used as a binder for inorganic particles ($E_{iii}3$) in examples, which will be described later.

Example III-4: Production of binder for inorganic particles ($E_{iii}4$)

A slurry solution was prepared in the same manner as in Example 1, except that 100 parts by mass of the polyvinyl alcohol resin (PVA5-98 manufactured by Kuraray Co., Ltd. and having a degree of saponification of 98.5 mol%) was used. Then, a modified polyvinyl alcohol resin "$PVOH_{iii}$-D" having a methacryloyl group in the side chain was obtained in the same manner as in Example III-1, except that a reaction was started by raising the temperature to 100°C 1 hour after the slurry solution was prepared, the reaction proceeded for 10 hours, and the solution was cooled to room temperature. The results of evaluation of the obtained "$PVOH_{iii}$-D" are shown in Table 5. This "$PVOH_{iii}$-D" was used as a binder for inorganic particles ($E_{iii}4$) in examples, which will be described later.

Example III-5: Production of binder for inorganic particles ($E_{iii}5$)

A slurry solution was prepared in the same manner as in Example III-1, except that 450 parts by mass of methyl acrylate was used instead of methyl methacrylate, and 100 parts by mass of the polyvinyl alcohol resin (PVA28-98 manufactured by Kuraray Co., Ltd. and having a degree of saponification of 98.5 mol%) was used. Then, a modified polyvinyl alcohol resin "$PVOH_{iii}$-E" having an acryloyl group in the side chain was obtained in the same manner as in Example III-1, except that a reaction was started by raising the temperature to 100°C 1 hour after the slurry solution was prepared, the reaction proceeded for 2 hours, and the solution was cooled to room temperature. The results of evaluation of the obtained "$PVOH_{iii}$-E" are shown in Table 5. This "$PVOH_{iii}$-E" was used as a binder for inorganic particles ($E_{iii}5$) in examples, which will be described later.

Example III-6: Production of binder for inorganic particles ($E_{iii}6$)

A slurry solution was prepared in the same manner as in Example III-1, except that 450 parts by mass of 3,3-dimethyl-4-methylpentanoate was used instead of methyl methacrylate, and 100 parts by mass of the polyvinyl alcohol resin (PVA28-98 manufactured by Kuraray Co., Ltd. and having a degree of saponification of 98.5 mol%) was used. Then, a modified polyvinyl alcohol resin "$PVOH_{iii}$-F" having an acyl group derived from 3,3-dimethyl-4-pentenoic acid in the side chain was obtained in the same manner as in Example III-1, except that a reaction was started by raising the temperature to 100°C 1 hour after the slurry solution was prepared, the reaction proceeded for 5 hours, and the solution was cooled to room temperature. The results of evaluation of the obtained "$PVOH_{iii}$-F" are shown in Table 5. This "$PVOH_{iii}$-F" was used as a binder for inorganic particles ($E_{iii}6$) in examples, which will be described later.

Comparative Example III-1: Production of binder for inorganic particles ($C_{iii}1$)

As an unmodified polyvinyl alcohol resin, the polyvinyl alcohol resin (PVA28-98 manufactured by Kuraray Co., Ltd. and having a degree of saponification of 98.5 mol%) was directly used as "$PVOH_{iii}$-G". This "$PVOH_{iii}$-G" was used as a binder for inorganic particles ($C_{iii}1$) in comparative examples, which will be described later.

Comparative Example III-2: Production of binder for inorganic particles ($C_{iii}2$)

640 parts by mass of vinyl acetate, 136.5 parts by mass of methanol, and 4.9 parts by mass of 3-methacrylamidopropyltrimethoxysilane were fed into a reactor provided with a stirrer, a reflux condenser, an argon introduction tube, and an initiator addition port, and the reaction system was purged with argon for 30 minutes while argon gas was being bubbled. Also, 3-methacrylamidopropyltrimethoxysilane was dissolved in methanol to prepare a comonomer solution having a concentration of 40% as a delay solution, and this solution was purged with argon by bubbling argon gas. The temperature of the reactor was raised, and when the internal temperature reached 60°C, 0.34 parts by mass of 2,2'-azobisisobutyronitrile was added to initiate polymerization. A polymerization reaction was carried out at 60°C for 150 minutes while monitoring the monomer composition (the ratio of vinyl acetate and 3-methacrylamidopropyltrimethoxysilane) in the polymerization solution by dropping the delay solution, the reactor was cooled to stop the polymerization. The total amount of the comonomer solution (successively added solution) that was added until the polymerization was stopped was 43.5 parts by mass. Then, unreacted monomers were removed while methanol was occasionally added at 30°C under a reduced pressure, and a methanol solution containing polyvinyl acetate (having a concentration of 25.6%) was obtained. Then, 21.4 parts by mass of methanol was added to 75.5 parts by mass of this methanol solution, and 3.1 parts by mass of a methanol solution of sodium hydroxide (having a concentration of 10%) was further added, and saponification was performed at 40°C. A gel-like product produced during the reaction was crushed with a crusher, the crushed product was returned to the reactor and left at 40°C for 60 minutes in total so that saponification proceeded, and the remaining alkalis were neutralized by adding 100 parts by mass of methyl acetate and 10 parts by mass of water. After the completion of the neutralization was confirmed using a phenolphthalein indicator, the mixture was filtered to obtain a white solid, methanol was added thereto, and the resulting mixture was left and cleaned at room temperature for 3 hours. After the above-described cleaning operation was repeated three times, the white solid obtained through centrifugation was dried overnight in a vacuum dryer at 40°C and 1.3 Pa, and thus a modified polyvinyl alcohol resin "$PVOH_{iii}$-H" having a silanol group in the side chain was obtained. The results of evaluation of the obtained "$PVOH_{iii}$-H" are shown in Table 1. This "$PVOH_{iii}$-H" was used as a binder for inorganic particles ($C_{iii}2$) in comparative examples, which will be described later.

[Table 5]

| | Name of Inorganic Particle Binder | Modified Polyvinyl Alcohol Resin | | | | |
|---|---|---|---|---|---|---|
| | | Name | Number Average Molecular Weight | Vinyl Alcohol Unit (mol%) | Ethylenically Unsaturated Group Introduced into Side Chain | Modification Rate (mol%) |
| Example III-1 | $E_{iii}1$ | $PVOH_{iii}$-A | 75,000 | 99.0 | Methacryloyl Group | 1.0 |
| Example III-2 | $E_{iii}2$ | $PVOH_{iii}$-B | 74,000 | 97.9 | Methacryloyl Group | 2.1 |
| Example III-3 | $E_{iii}3$ | $PVOH_{iii}$-C | 106,000 | 98.4 | Methacryloyl Group | 0.1 |
| Example III-4 | $E_{iii}4$ | $PVOH_{iii}$-D | 22,000 | 92.9 | Methacryloyl Group | 5.6 |
| Example III-5 | $E_{iii}5$ | $PVOH_{iii}$-E | 76,000 | 97.5 | Acryloyl Group | 1.0 |
| Example III-6 | $E_{iii}6$ | $PVOH_{iii}$-F | 74,000 | 96.5 | Acyl Group[1)] | 2.0 |
| Comparative Example III-1 | $C_{iii}1$ | $PVOH_{iii}$-G | 75,000 | 98.5 | None | 0 |
| Comparative Example III-2 | $C_{iii}2$ | $PVOH_{iii}$-H | 89,000 | 95.9 | Silanol Group | 2.9 |
| [1)] Derived from methyl 3,3-dimethyl-4-penteneate | | | | | | |

Examples III-7 to III-11 and Comparative Examples III-3 and III-4: Production of cured film (inorganic particle-immobilized structure))

The binders for inorganic particles ($E_{iii}1$) to ($E_{iii}6$) and ($C_{iii}1$) and ($C_{iii}2$) produced in Examples III-1 to III-6 and Comparative Examples III-1 and III-2 were each dissolved in deionized water to prepare a 10% aqueous solution. Wet silica (ULTRASIL7000GR manufactured by Evonik Degussa) or swelling mica (layered silicate; NHT-sol B2, which is an aqueous dispersion having a concentration of 5 mass% and manufactured by Topy Industries, Ltd.) was added to

the respective aqueous solutions so as to have the mass ratios shown in Table 6 with respect to 100 parts by mass of the polyvinyl alcohol resin in the aqueous solutions, and the resulting solutions were mixed using the precision dispersion/emulsion machine "CLEARMIX" manufactured by M Technique Co., Ltd. at a rotational speed of 6,400 rpm for 2 minutes while being sheared by a jet flow. Thereafter, a coating solution was obtained by adding, as a photopolymerization initiator, 1 part by mass of a photoradical precursor (2-hydroxy-4'-(2-hydroxymethoxy)-2-methylpropiophenone) with respect to 100 parts by mass of the polyvinyl alcohol resin.

Then, this coating solution was applied onto a polyethylene terephthalate substrate using a bar coater and dried at 80°C for 30 minutes, and then a single-layer uncured film having a thickness of about 100 μm was obtained by peeling the film off from the substrate. A single-layer cured film (inorganic particle-immobilized structure) in which inorganic particles were immobilized was produced by irradiating the film with UV light or an electron beam (EB) at the intensities shown in Table 6.

The results of evaluation of the coating solution and cured film produced above are shown in Table 6.

[Table 6]

| | Polyvinyl Alcohol Resin (A) | Inorganic Particle (B1) | (A)/(B1) Mass Ratio | Coating Solution | Cured Film | | |
|---|---|---|---|---|---|---|---|
| | | | | Viscosity Stability | Type | Irradiation Condition | Water Resistance (Dissolution Ratio, %) |
| Example III-7 | $PVOH_{iii}$-A (Modified) | Silica | 100/20 | A | UV | 3000mJ/$cm^2$ | 14.1 |
| Example III-8 | $PVOH_{iii}$-B (Modified) | Silica | 100/20 | A | UV | 3000mJ/$cm^2$ | 16.5 |
| Example III-9 | $PVOH_{iii}$-C (Modified) | Silica | 100/20 | A | UV | 3000mJ/$cm^2$ | 34.4 |
| Example III-10 | $PVOH_{iii}$-D (Modified) | Silica | 100/20 | B | UV | 3000mJ/$cm^2$ | 13.2 |
| Example III-11 | $PVOH_{iii}$-E (Modified) | Silica | 100/20 | B | UV | 3000mJ/$cm^2$ | 13.6 |
| Example III-12 | $PVOH_{iii}$-F (Modified) | Silica | 100/20 | A | UV | 10000mJ/$cm^2$ | 29.6 |
| Example III-13 | $PVOH_{iii}$-F (Modified) | Silica | 100/20 | A | EB | 30kGy | 15.0 |
| Example III-14 | $PVOH_{iii}$-A (Modified) | Silica | 100/50 | A | UV | 3000mJ/$cm^2$ | 20.1 |
| Example III-15 | $PVOH_{iii}$-A (Modified) | Mica | 100/10 | A | UV | 3000mJ/$cm^2$ | 16.2 |
| Example III-16 | $PVOH_{iii}$-C (Modified) | Mica | 100/10 | A | UV | 3000mJ/$cm^2$ | 30.4 |
| Example III-17 | $PVOH_{iii}$-D (Modified) | Mica | 100/10 | B | UV | 3000mJ/$cm^2$ | 13.6 |
| Comparative Example III-3 | $PVOH_{iii}$-G (未変性) | Silica | 100/20 | A | UV | 3000mJ/$cm^2$ | - |
| Comparative Example III-4 | $PVOH_{iii}$-H (Modified) | Silica | 100/20 | C | UV | 3000mJ/$cm^2$ | 14.9 |

As shown in Table 6, it is found that all of the coating solutions prepared in the Examples III-7 to III-17 had a higher viscosity stability than the coating solution prepared in Comparative Example III-4. The binder for inorganic particles (containing the modified polyvinyl alcohol resin ($PVOH_{iii}$-H) having the silanol group in the side chain) produced in Comparative Example II-2 was used in the coating solution prepared in Comparative Example III-4. In contrast, the

binders for inorganic particles (containing the modified polyvinyl alcohol resin ($PVOH_{iii}$-A to $PVOH_{iii}$-F) having a methacryloyl group, an acryloyl group, or an acyl group derived from 3,3-dimethyl-4-methylpentenoate in the side chain) produced in Examples III-1 to III-6 were used in the coating solutions prepared in Examples III-7 to III-17, and such viscosity stabilities were obtained depending on the differences between substituents introduced into the side chains. Based on this, it is found that the coating solutions prepared in Examples III-7 to III-17 exhibit good viscosity stability for a long period of time even in a situation where the coating solutions are stored in a warehouse after the coating solutions are prepared, and they are sheared and re-dispersed when they are applied.

Also, it is found that, although the cured films produced in Examples III-7 to III-17 were obtained by curing the modified polyvinyl alcohol resins by UV light or an electron beam, they had higher water resistance than the film produced in Comparative Example III-3 in which the unmodified polyvinyl alcohol ($PVOH_{iii}$-G) was used.

Here, if an unmodified polyvinyl alcohol resin is used as a binder for inorganic particles as in Comparative Example III-3, water resistance is insufficient, and thus the binder elutes when it comes into contact with water, and the contained inorganic particles are dispersed in water. If a polyvinyl alcohol resin modified with a silanol group is used as a binder for inorganic particles as in Comparative Example III-4, the coat exhibits high water resistance, whereas when shearing force is repeatedly applied to a coating solution, viscosity changes significantly, and the binder has poor handleability. Although the cause of this is not clear, it is conceivable that the introduced silyl group has high reactivity to the inorganic particles, and thus a cross-linking reaction between binders progresses via the inorganic particles due to local heat generated through shearing, and the viscosity gradually increases.

Examples III-18 to III-20: Production of gas barrier member

A bar coater was used to apply each of the coating solutions produced in Examples III-15 to III-17 to an OPP sheet substrate that had a thickness of 20 μm and was subjected to corona treatment, the substrate was dried at 80°C for 30 minutes, and thus a pretreatment member in which the coating layer had a thickness of about 30 μm was produced. A gas barrier member (a laminate) was obtained by curing the modified polyvinyl alcohol resin contained in the coating layer by irradiating the pretreatment member with UV light at an intensity of 3,000 $mJ/cm^2$. The results of evaluation of the obtained gas barrier member are shown in Table 7.

Comparative Example III-5: Production of gas barrier member

A 10% aqueous solution of an unmodified polyvinyl alcohol resin "$PVOH_{iii}$-G" was prepared using the binder ($C_{iii}1$) for inorganic particles produced in Comparative Example III-1 and deionized water, and a coating solution was produced by adding 1 part by mass of a photoradical precursor (2-hydroxy-4'-(2-hydroxymethoxy)-2-methylpropiophenone) with respect to 100 parts by mass of the unmodified polyvinyl alcohol resin in this aqueous solution. This coating solution did not contain inorganic particles such as mica (layered silicate). A gas barrier member was obtained in the same manner as in Example III-18, except that this coating solution was used. The results of evaluation of the obtained gas barrier member are shown in Table 7.

Comparative Example III-6: Production of gas barrier member

A 10% aqueous solution of an unmodified polyvinyl alcohol resin "$PVOH_{iii}$-A" was prepared using the binder ($E_{iii}1$) for inorganic particles produced in Example III-1 and deionized water, and a coating solution was produced by adding 1 part by mass of a photoradical precursor (2-hydroxy-4'-(2-hydroxymethoxy)-2-methylpropiophenone) with respect to 100 parts by mass of the unmodified polyvinyl alcohol resin in this aqueous solution. This coating solution did not contain inorganic particles such as mica (layered silicate). A gas barrier member was obtained in the same manner as in Example III-18, except that this coating solution was used. The results of evaluation of the obtained gas barrier member are shown in Table 7.

[Table 7]

| | Polyvinyl Alcohol Resin (A) | Inorganic Particle (B1) | (A)/(B1) Mass Ratio | Gas Barrier Member |
|---|---|---|---|---|
| | | | | OTR (cc/20pm·day/atm) |
| Example III-18 | $PVOH_{iii}$-A (Modified) | Mica | 100/10 | 8.6 |
| Example III-19 | $PVOH_{iii}$-C (Modified) | Mica | 100/10 | 15.4 |
| Example III-20 | $PVOH_{iii}$-D (Modified) | Mica | 100/10 | 14.6 |

(continued)

| | Polyvinyl Alcohol Resin (A) | Inorganic Particle (B1) | (A)/(B1) Mass Ratio | Gas Barrier Member |
|---|---|---|---|---|
| | | | | OTR (cc/ 20pm·day/atm) |
| Comparative Example III-5 | $PVOH_{iii}$-G (Unmodified) | None | 100/0 | 49.2 |
| Comparative Example III-6 | $PVOH_{iii}$-A (Modified) | None | 100/0 | 27.5 |

As shown in Table 7, it is found that all of the gas barrier members produced in Examples III-18 to III-20 had extremely low oxygen transmission rates (ORT) compared to the gas barrier members of Comparative Examples III-5 and III-6, and had good gas barrier properties even under a high humidity adopted in this evaluation. Also, with the gas barrier member in which the unmodified polyvinyl alcohol resin was used as in Comparative Example III-5, the barrier layer is plasticized through absorption of water in a high humidity environment, and thus sufficient gas barrier properties were not exhibited. Also, with the gas barrier member in which the modified polyvinyl alcohol resin ($PVOH_{iii}$-A) was used as in Comparative Example III-6, a barrier layer was unlikely to be plasticized due to a decrease in water absorption in a high humidity environment due to the modified portions being cross-linked, and sufficient gas barrier properties were not exhibited unless the gas barrier member was used in combination with the inorganic particles.

Example IV: Production and evaluation of anti-bacterial resin composition

Calculation of modification ratio

$^{1}$H-NMR of the modified polyvinyl alcohol resin was measured at room temperature using the nuclear magnetic resonance apparatus "LAMBDA 500" manufactured by JEOL Ltd., and the modification ratio thereof was calculated based on the integral values of peaks (5.0 to 7.5 ppm) derived from the olefin protons. In Synthesis Example 1, the modification ratio was calculated based on the integral values of the peaks derived from olefin protons present at 5.6 ppm and 6.0 ppm, for example.

Evaluation of water resistance

The mass ($W_{iv}1$) of the cross-linked films, cross-linked gel films, or films ($EF_{iv}1$) to ($EF_{iv}10$) and ($CF_{iv}1$) to ($CF_{iv}3$) obtained in Examples IV-1 to IV-10 and Comparative Examples IV-1 to IV-3 was measured, the mass ($W_{iv}2$) of those cross-linked films, cross-linked gel films, or films obtained after being vacuum-dried at 80°C for 24 hours was measured, and the solid contents ($TS_{iv}$) of the cross-linked films and films were calculated based on $W_{iv}1$ and $W_{iv}2$ according to the following equation:

$$TS_{iv}\ (\text{mass\%}) = 100 \times W_{iv}2\ /\ W_{iv}1$$

Then, a predetermined cross-linked film, cross-linked gel film, or film at the (untreated) stage where evaluation was started was immersed in boiling water for 1 hour and removed from water, and the mass ($W_{iv}3$) obtained after the film was vacuum-dried at 80°C for 24 hours was measured, the dissolution ratio was calculated using $W_{iv}1$, TSiv, and $W_{iv}3$ that were ultimately obtained above according to the following equation, and the calculated value was used as an index of cross-linking water resistance. Note that the lower the dissolution ratio is, the higher the water resistance is.

$$\text{Dissolution ratio (mass\%)} = 100 - \{W_{iv}3\ /\ (W_{iv}1 \times TS_{iv}/100)\} \times 100$$

Evaluation of anti-bacterial activity (*Escherichia coli*)

Evaluation was made according to a test method in JIS Z 2801: 2010 "Antibacterial products - Test for anti-bacterial activity and efficacy". Both surfaces of a test piece having a size of 5 cm × 4 cm, which was cut out from each

of the cross-linked films, cross-linked gel films, or films obtained in Examples IV-1 to IV-10 and Comparative Examples IV-1 to IV-3 were wiped with cotton wool that had absorbed ethanol, and the both surfaces were dried in an aseptic condition. Then, 0.3 mL of *Escherichia coli* with a cell count of 6.9 $\times$ $10^5$ /mL was dropped on one surface of the test piece, and the surface was covered with a polyethylene film. The test piece was left at 35°C for 24 hours, the bacterial culture was washed out, and the number of bacteria was counted.

Evaluation of anti-bacterial activity (*Staphylococcus aureus*)

Evaluation was made in the same manner as the anti-bacterial test for *Escherichia coli,* except that the bacterial culture to be dropped was changed to a bacterial culture of *Staphylococcus aureus* with a cell count of 6.6 $\times$ $10^5$ /mL.

Synthesis Example IV-1

510.3 parts by mass of methacrylic acid, 24.0 parts by mass of acetic acid, 28.4 parts by mass of ion-exchanged water, 1.3 parts by mass of p-methoxyphenol, and 8.1 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 95 mol%) was added while the mixture was being stirred at room temperature, and the temperature was raised to 65°C while the mixture was being stirred so that a reaction proceeded for 1 hour in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{iv}$-1". The results of evaluation are shown in Table 8.

Synthesis Example IV-2

476.3 parts by mass of methacrylic acid, 62.4 parts by mass of acetic acid, 28.4 parts by mass of ion-exchanged water, 1.3 parts by mass of p-methoxyphenol, and 9.1 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 300 and a degree of saponification of 82 mol%) was added while the mixture was being stirred at room temperature, and the temperature was raised to 65°C while the mixture was being stirred so that a reaction proceeded for 2.8 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{iv}$-2". The results of evaluation are shown in Table 8.

Synthesis Example IV-3

510.3 parts by mass of 4-pentenoic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 60°C while the mixture was being stirred so that a reaction proceeded for 3 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{iv}$-3". The results of evaluation are shown in Table 8.

Synthesis Example IV-4

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 90°C while the mixture was being stirred so that a reaction proceeded for 3 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{iv}$-4". The results of evaluation are shown in Table 8.

Synthesis Example IV-5

499.0 parts by mass of methacrylic acid, 39.7 parts by mass of acetic acid, 28.4 parts by mass of ion-exchanged water, 1.3 parts by mass of p-methoxyphenol, and 3.4 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 2,400 and a degree of saponification of 88 mol%) was added while the mixture was being stirred at room temperature, and the temperature was raised to 75°C while the mixture was being stirred so that a reaction proceeded for 2.5 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{iv}$-5". The results of evaluation are shown in Table 8.

Synthesis Example IV-6

493.3 parts by mass of acrylic acid, 17.0 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 1,700 and a degree of saponification of 98.5 mol%) was added while the mixture was being stirred at room temperature, and the temperature was raised to 65°C while the mixture was being stirred so that a reaction proceeded for 3.5 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{iv}$-6". The results of evaluation are shown in Table 8.

Synthesis Example IV-7

454.2 parts by mass of methacrylic acid, 5.7 parts by mass of acetic acid, 56.7 parts by mass of ion-exchanged water, 1.3 parts by mass of p-methoxyphenol, and 4.2 parts by mass of p-toluenesulfonic acid monohydrate were successively fed into a reactor provided with a stirrer, a reflux tube, and an addition port, 100 parts by mass of a commercially available polyvinyl alcohol resin (having a number-average degree of polymerization of 500 and a degree of saponification of 98.5 mol%) was added while the mixture was being stirred at room temperature, and the temperature was raised to 90°C while the mixture was being stirred so that a reaction proceeded for 9 hours in a slurry state. Then, the mixture was cooled to room temperature, the content was filtered to collect a modified polyvinyl alcohol resin, the modified polyvinyl alcohol resin was cleaned with a large amount of methanol and dried at 40°C and 1.3 Pa for 20 hours so as to obtain a modified polyvinyl alcohol resin "$PVOH_{iv}$-7". The results of evaluation are shown in Table 8.

Note that a commercially available polyvinyl alcohol resin (having a number-average degree of polymerization of 1,700 and a degree of saponification of 98.5 mol%) was used as an unmodified polyvinyl alcohol resin, and was used as "$PVOH_{iv}$-8".

[Table 8]

| | Modified Polyvinyl Alcohol Resin | | | | |
|---|---|---|---|---|---|
| | Name | Number Average Molecular Weight | Vinyl Alcohol Unit (mol%) | Ethylenically Unsaturated Group Introduced into Side Chain | Modification Ratio (mol%) |
| Synthesis Example IV-1 | $PVOH_{iv}$-1 (Modified) | 43000 | 94.9 | Methacryloyl Group | 0.1 |
| Synthesis Example IV-2 | $PVOH_{iv}$-2 (Modified) | 13000 | 81.3 | Methacryloyl Group | 0.7 |
| Synthesis Example IV-3 | $PVOH_{iv}$-3 (Modified) | 75000 | 96.1 | Acyl group derived from 4-Pentenoic acid | 3.8 |

(continued)

| | Modified Polyvinyl Alcohol Resin | | | | |
|---|---|---|---|---|---|
| | Name | Number Average Molecular Weight | Vinyl Alcohol Unit (mol%) | Ethylenically Unsaturated Group Introduced into Side Chain | Modification Ratio (mol%) |
| Synthesis Example IV-4 | $PVOH_{iv}$-4 (Modified) | 74000 | 97 | Methacryloyl Group | 1.5 |
| Synthesis Example IV-5 | $PVOH_{iv}$-5 (Modified) | 105600 | 87.5 | Methacryloyl Group | 0.5 |
| Synthesis Example IV-6 | $PVOH_{iv}$-6 (Modified) | 74800 | 95.7 | Acryloyl Group | 1.0 |
| Synthesis Example IV-7 | $PVOH_{iv}$-7 (Modified) | 23000 | 95.5 | Methacryloyl Group | 4.5 |
| - | $PVOH_{iv}$-8 (Unmodified) | 74800 | 98.5 | - | - |

Example IV-1: Production of cross-linked film ($EF_{iv}1$)

0.3 parts by mass of silver oxide (199-00882 manufactured by FUJIFILM Wako Pure Chemical Corporation) was added to 7 parts by mass of a 10%-aqueous solution of $PVOH_{iv}$-1 obtained in Synthesis Example IV-1, and was mixed until the resulting mixture became uniform. 0.01 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L1).

Then, this resin composition (L1) was cast in a mold having a size of 15 cm × 15 cm, which was produced by bending ends of a polyethylene terephthalate film, and the solvent was sufficiently volatilized at room temperature in an atmospheric pressure, and thus a film having a thickness of about 100 μm was obtained. A cross-linked film ($EF_{iv}1$) was obtained by irradiating one surface of the obtained film with UV light at an intensity of 3,000 mJ/cm$^2$. The results of evaluation of the obtained cross-linked film ($EF_{iv}1$) are shown in Table 9.

Example IV-2: Production of cross-linked film ($EF_{iv}2$)

3 parts by mass of an aqueous solution obtained by diluting a diallyldimethylammonium chloride polymer (PAS-H-10L, which is a 28%-aqueous solution and manufactured by Nittobo Medical Co., Ltd.) to 10% was added to 7 parts by mass of a 10%-aqueous solution of $PVOH_{iv}$-2 obtained in Synthesis Example IV-2, and the resulting mixture was mixed until it became uniform. 0.01 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L2).

A cross-linked film ($EF_{iv}2$) was obtained in the same manner as in Example VI-1, except that the resin composition (L2) was used instead of the resin composition (L1). The results of evaluation of the obtained cross-linked film ($EF_{iv}2$) are shown in Table 9.

Example IV-3: Production of cross-linked film ($EF_{iv}3$)

0.4 parts by mass of zinc oxide (264-00365 manufactured by FUJIFILM Wako Pure Chemical Corporation) was added to 6 parts by mass of a 10%-aqueous solution of $PVOH_{iv}$-3 obtained in Synthesis Example IV-3, and was mixed until the resulting mixture became uniform. 0.01 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L3).

A cross-linked film ($EF_{iv}3$) was obtained in the same manner as in Example IV-1, except that the resin composition (L3) was used instead of the resin composition (L1) and the intensity of UV light was changed from 3,000 mJ/cm$^2$

to 10,000 mJ/cm$^2$. The results of evaluation of the obtained cross-linked film ($EF_{iv}3$) are shown in Table 9.

Example IV-4: Production of cross-linked film ($EF_{iv}4$)

4.5 parts by mass of ion-exchanged water was added to 0.5 parts by mass of chitosan (032-16092 manufactured by FUJIFILM Wako Pure Chemical Corporation), and 0.22 parts by mass of adipic acid (017-20575 manufactured by FUJIFILM Wako Pure Chemical Corporation) was added, heated, and stirred until complete dissolution. 7.2 parts by mass of a 10%-aqueous solution of $PVOH_{iv}$-4 obtained in Synthesis Example IV-4 was added to the obtained aqueous solution, and the resulting mixture was mixed until it became uniform so as to produce a liquid resin composition (L4).

A cross-linked film ($EF_{iv}4$) was obtained in the same manner as in Example IV-1, except that the resin composition (L4) was used instead of the resin composition (L1) and the film was irradiated with an electron beam (EB) at an intensity of 30 kGy instead of irradiation with UV light. The results of evaluation of the obtained cross-linked film ($EF_{iv}4$) are shown in Table 9.

Example IV-5: Production of cross-linked film ($EF_{iv}5$)

4.5 parts by mass of ion-exchanged water was added to 0.5 parts by mass of chitosan (032-16092 manufactured by FUJIFILM Wako Pure Chemical Corporation), and 0.22 parts by mass of adipic acid (017-20575 manufactured by FUJIFILM Wako Pure Chemical Corporation) was added, heated, and stirred until complete dissolution. 3.1 parts by mass of a 10%-aqueous solution of $PVOH_{iv}$-5 obtained in Synthesis Example IV-5 was added to the obtained aqueous solution, and the resulting mixture was mixed until it became uniform. 0.01 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L5).

A cross-linked film ($EF_{iv}5$) was obtained in the same manner as in Example IV-1, except that the resin composition (L5) was used instead of the resin composition (L1). The results of evaluation of the obtained cross-linked film ($EF_{iv}5$) are shown in Table 9.

Example IV-6: Production of cross-linked gel film ($EF_{iv}6$)

4.5 parts by mass of ion-exchanged water was added to 0.5 parts by mass of chitosan (032-16092 manufactured by FUJIFILM Wako Pure Chemical Corporation), and 0.14 parts by mass of acetic acid (017-00256 manufactured by FUJIFILM Wako Pure Chemical Corporation) was added, heated, and stirred until complete dissolution. 9.6 parts by mass of a 10%-aqueous solution of $PVOH_{iv}$-6 obtained in Synthesis Example IV-6 was added to the obtained aqueous solution, and the resulting mixture was mixed until it became uniform. 0.09 parts by mass of 3,6-dioxa-1,8-octanedithiol (DODT) was added as a cross-linking agent, and the resulting mixture was stirred until the cross-linking agent was completely dissolved so as to produce a liquid resin composition (L6).

Then, this resin composition (L6) was cast in a mold having a size of 15 cm × 15 cm, which was produced by bending ends of a polyethylene terephthalate film, and the mold was covered with aluminum foil so as to prevent volatilization of water and was subjected to heat treatment at 100°C for 30 minutes, and thus a cross-linked gel film ($EF_{iv}6$) was obtained. The results of evaluation of the obtained cross-linked gel film ($EF_{iv}6$) are shown in Table 9.

Example IV-7: Production of cross-linked film ($EF_{iv}7$)

4.5 parts by mass of ion-exchanged water was added to 0.5 parts by mass of chitosan (032-16092 manufactured by FUJIFILM Wako Pure Chemical Corporation), and 0.14 parts by mass of acetic acid (017-00256 manufactured by FUJIFILM Wako Pure Chemical Corporation) was added, heated, and stirred until complete dissolution. 14.9 parts by mass of a 10%-aqueous solution of $PVOH_{iv}$-7 obtained in Synthesis Example IV-7 was added to the obtained aqueous solution, and the resulting mixture was mixed until it became uniform. 0.02 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L7).

A cross-linked film ($EF_{iv}7$) was obtained in the same manner as in Example 1, except that the resin composition (L7) was used instead of the resin composition (L1). The results of evaluation of the obtained cross-linked film ($EF_{iv}7$) are shown in Table 9.

Example IV-8: Production of cross-linked film ($EF_{iv}8$)

0.2 parts by mass of copper powder (031-03992 manufactured by FUJIFILM Wako Pure Chemical Corporation) was added to 8 parts by mass of a 10%-aqueous solution of $PVOH_{iv}$-4 obtained in Synthesis Example IV-4, and was

mixed until the resulting mixture became uniform. 0.01 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L8).

A PET film with a thickness of 100 μm that was subjected to corona treatment was coated with this resin composition (L8), using a bar coater, such that the thickness of the dried coat was 20 μm, and was dried at 80°C for 30 minutes. A cross-linked film ($EF_{iv}8$) was obtained by irradiating the coat side of the obtained laminate film with UV light at an intensity of 3,000 mJ/$cm^2$. The results of evaluation of the obtained cross-linked film ($EF_{iv}8$) are shown in Table 9.

Note that in the evaluation of water resistance (dissolution ratio), the dissolution ratio of only the coat layer was calculated by subtracting the weight of PET, which is a substrate. In the evaluation of anti-bacterial activity, the anti-bacterial activity was evaluated by dropping *Escherichia coli* or *Staphylococcus aureus* on the coat side.

Example IV-9: Production of cross-linked film ($EF_{iv}9$)

4.5 parts by mass of ion-exchanged water was added to 0.5 parts by mass of chitosan (032-16092 manufactured by FUJIFILM Wako Pure Chemical Corporation), and 0.22 parts by mass of adipic acid (017-20575 manufactured by FUJIFILM Wako Pure Chemical Corporation) was added, heated, and stirred until complete dissolution. 7.2 parts by mass of a 10%-aqueous solution of $PVOH_{iv}$-4 obtained in Synthesis Example IV-4 was added to the obtained aqueous solution, and the resulting mixture was mixed until it became uniform. 0.01 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L9).

A cross-linked film ($EF_{iv}9$) was obtained in the same manner as in Example IV-8, except that the resin composition (L9) was used instead of the resin composition (L8). Evaluation was made in the same manner as in Example IV-8. The results of evaluation of the obtained cross-linked film ($EF_{iv}9$) are shown in Table 9.

Example IV-10: Production of cross-linked gel film (EF10)

4.5 parts by mass of ion-exchanged water was added to 0.5 parts by mass of chitosan (032-16092 manufactured by FUJIFILM Wako Pure Chemical Corporation), and 0.17 parts by mass of adipic acid (017-20575 manufactured by FUJIFILM Wako Pure Chemical Corporation) was added, heated, and stirred until complete dissolution. 26.8 parts by mass of a 10%-aqueous solution of $PVOH_{iv}$-6 obtained in Synthesis Example IV-6 was added to the obtained aqueous solution, and the resulting mixture was mixed until it became uniform. 0.03 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L10).

Then, this resin composition (L10) was cast in a mold having a size of 15 cm × 15 cm, which was produced by bending ends of a polyethylene terephthalate film, and one surface of the liquid resin composition (L10) was irradiated with UV light at an intensity of 3,000 mJ/$cm^2$ so as to obtain a cross-linked gel film ($EF_{iv}10$). The results of evaluation of the obtained cross-linked gel film ($EF_{iv}10$) are shown in Table 9.

Comparative Example VI-1: Production of film ($CF_{iv}1$)

4.5 parts by mass of ion-exchanged water was added to 0.5 parts by mass of chitosan (032-16092 manufactured by FUJIFILM Wako Pure Chemical Corporation), and 0.14 parts by mass of acetic acid (017-00256 manufactured by FUJIFILM Wako Pure Chemical Corporation) was added, heated, and stirred until complete dissolution. 9.6 parts by mass of a 10%-aqueous solution of $PVOH_{iv}$-8 was added to the obtained aqueous solution, and the resulting mixture was mixed until it became uniform. 0.01 parts by mass of 2-hydroxy-4'-(2-hydroxyethoxy)-2-methylpropiophenone (HEMP) was added as a photopolymerization initiator, and the resulting mixture was stirred until the photopolymerization initiator was completely dissolved so as to produce a liquid resin composition (L11).

A film ($CF_{iv}11$) was obtained in the same manner as in Example IV-1, except that the resin composition (L11) was used instead of the resin composition (L1). The results of evaluation of the obtained film ($CF_{iv}11$) are shown in Table 9.

Comparative Example IV-2: Production of cross-linked film ($CF_{iv}2$)

0.01 parts by mass of 2-hydroxy-4'-(2-hydroxyethoxy)-2-methylpropiophenone (HEMP) was added as a photopolymerization initiator to 10 parts by mass of a 10% aqueous solution of $PVOH_{iv}$-4 obtained in Synthesis Example IV-4, and the resulting mixture was stirred until the photopolymerization initiator was completely dissolved so as to produce a liquid resin composition (L12).

A cross-linked film ($CF_{iv}2$) was obtained in the same manner as in Example IV-1, except that the resin composition (L12) was used instead of the resin composition (L1). The results of evaluation of the obtained cross-linked film

($CF_{iv}2$) are shown in Table 9.

Comparative Example IV-3: Production of film ($CF_{iv}3$)

4.5 parts by mass of ion-exchanged water was added to 0.5 parts by mass of chitosan (032-16092 manufactured by FUJIFILM Wako Pure Chemical Corporation), and 0.14 parts by mass of acetic acid (017-00256 manufactured by FUJIFILM Wako Pure Chemical Corporation) was added, heated, and stirred until complete dissolution. 0.01 parts by mass of 2-hydroxy-4'-(2-hydroxyethoxy)-2-methylpropiophenone (HEMP) was added as a photopolymerization initiator to 10 parts by mass of the obtained aqueous solution, and the resulting mixture was stirred until the photopolymerization initiator was completely dissolved so as to produce a resin composition (L13).

A film ($CF_{iv}3$) was obtained in the same manner as in Example IV-1, except that the resin composition (L13) was used instead of the resin composition (L1). The results of evaluation of the obtained film ($CF_{iv}3$) are shown in Table 9.

[Table 9]

| | Anti-Bacterial Composition | | | Evaluation of Physical Properties | | | | Anti-Bacterial Activity | |
|---|---|---|---|---|---|---|---|---|---|
| | Modified Polyvinyl Alcohol Resin (A) | Anti-Bacterial Component (B2) | (A)/(B2) Mass Ratio | Form | Crosslinking | Crosslinking Conditions | Water Resistance (Dissolution Ratio: % by mass) | *Staphylococcus aureus* (cells) | *Escherichia coli* (cells) |
| Example IV-1 | $PVOH_{IV}$-1 | Silver Oxide | 70/30 | Film | UV Irradiated | 3000 $mJ/cm^2$ | 40.2 | <30 | <30 |
| Example IV-2 | $PVOH_{IV}$-2 | Diallyldimethylammonium Chloride Polymer | 70/30 | Film | UV Irradiated | 3000 $mJ/cm^2$ | 27.7 | <30 | <30 |
| Example IV-3 | $PVOH_{IV}$-3 | Zinc Oxide | 60/40 | Film | UV Irradiated | 10000 $mJ/cm^2$ | 34.4 | <30 | <30 |
| Example IV-4 | $PVOH_{IV}$-4 | Chitosan (100 mol% Neutralized with Adipic Acid) | 50/50 | Film | EB Irradiated | 30 kGy | 19.8 | <30 | <30 |
| Example IV-5 | $PVOH_{IV}$-5 | Chitosan (100 mol% Neutralized with Adipic Acid) | 30/70 | Film | UV Irradiated | 3000 $mJ/cm^2$ | 50.2 | <30 | <30 |
| Example IV-6 | $PVOH_{IV}$-6 | Chitosan (75 mol% Neutralized with Acetic Acid) | 60/40 | Solution | Heat Treated | 100℃, 30分 | 18.0 | <30 | <30 |
| Example IV-7 | $PVOH_{IV}$-7 | Chitosan (75 mol% Neutralized with Acetic Acid) | 70/30 | Film | UV Irradiated | 3000 $mJ/cm^2$ | 10.2 | <30 | <30 |
| Example IV-8 | $PVOH_{IV}$-4 | Copper Powder | 80/20 | Laminate | UV Irradiated | 3000 $mJ/cm^2$ | 15.2 | <30 | <30 |
| Example IV-9 | $PVOH_{IV}$-4 | Chitosan (100 mol% Neutralized with Adipic Acid) | 50/50 | Laminate | UV Irradiated | 3000 $mJ/cm^2$ | 19.5 | <30 | <30 |
| Examplex IV-10 | $PVOH_{IV}$-6 | Chitosan (100 mol% Neutralized with Adipic Acid) | 80/20 | Solution | UV Irradiated | 3000 $mJ/cm^2$ | 9.0 | <30 | <30 |
| Comparative Example IV-1 | $PVOH_{IV}$-8 | Chitosan (75 mol% Neutralized with Acetic Acid) | 60/40 | Film | UV Irradiated | 3000 $mJ/cm^2$ | 100% (Dissolved) | <30 | <30 |
| Comparative Example IV-2 | $PVOH_{IV}$-4 | - | 100/0 | Film | UV Irradiated | 3000 $mJ/cm^2$ | 3.5 | $1.0\times10^5$ | $1.3\times10^3$ |
| Comparative Example IV-3 | - | Chitosan (75 mol% Neutralized with Acetic Acid) | 0/100 | Film | UV Irradiated | 3000 $mJ/cm^2$ | 100% (Dissolved) | <30 | <30 |

As shown in Table 9, with regard to the cross-linked films or the cross-linked gel films ($EF_{iv}1$) to ($EF_{iv}10$) produced in Examples IV-1 to IV-10, the used anti-bacterial resin composition contained the predetermined modified polyvinyl alcohol resin (A) and the anti-bacterial component (B2), and had high cross-linking reactivity triggered by high energy rays or the like, and thus exhibited high water resistance and anti-bacterial activity. Therefore, the cross-linked films or the cross-linked gel films ($EF_{iv}1$) to ($EF_{iv}10$) produced in Examples IV-1 to IV-10 can be used in various forms

such as coatings or films.

In contrast, when a non-modified polyvinyl alcohol resin is used as in Comparative Example IV-1, it cannot be cross-linked with high energy rays or the like and thus is not water resistant, and thus the obtained film ($CF_{iv}1$) had significantly low water resistance. Also, the film ($CF_{iv}2$) that does not contain the anti-bacterial component (B2) as in Comparative Example IV-2 can be cross-linked with high energy rays or the like and can have water resistance, and thus anti-bacterial activity is not exhibited. Furthermore, when a resin composition, which did not contain a polyvinyl alcohol resin, was used as in Comparative Example IV-3, it cannot be cross-linked with high energy rays or the like and thus is not water resistant, and when another evaluation was made, the obtained film ($CF_{iv}3$) was extremely fragile.

Industrial Applicability

According to the present invention, a coating composition capable of forming a coat on various substrates is useful in various technical fields such as the resin molding field, automobile/railway/aircraft/ships-related field, medical product field, food field, agriculture/gardening field, electrical field, and construction field.

Cross-Reference of Related Applications

The present application claims the benefit of priority based on Japanese Patent Application No. 2019-084760 filed with Japan Patent Office on April 25, 2019, the benefit of priority based on Japanese Patent Application No. 2019-084761 filed with Japan Patent Office on April 25, 2019, the benefit of priority based on Japanese Patent Application No. 2019-093295 filed with Japan Patent Office on May 17, 2019, and the benefit of priority based on Japanese Patent Application No. 2019-115894 filed with Japan Patent Office on June 21, 2019, which are incorporated herein by reference in their entirety.

## Claims

1. A coating composition comprising a modified polyvinyl alcohol resin (A) having an ethylenically unsaturated group in a side chain thereof.

2. The coating composition according to claim 1, wherein the ethylenically unsaturated group includes a partial structure represented by Formula (I) below,

[Chemical Formula 1]

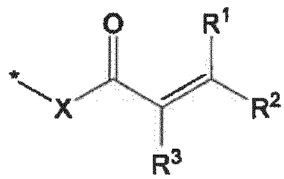

(I)

where, in Formula (I), $R^1$, $R^2$, and $R^3$ are independently a hydrogen atom, a methyl group, a carboxyl group, or a carboxymethyl group, X is an oxygen atom or $-N(R^4)-$, $R^4$ is a hydrogen atom or a hydrocarbon group having 1 to 3 carbon atoms, and * is an atomic bonding of the ethylenically unsaturated group.

3. The coating composition according to claim 1 or 2, wherein the modified polyvinyl alcohol resin (A) includes a structural unit represented by Formula (II) or (III) below,

[Chemical Formula 2]

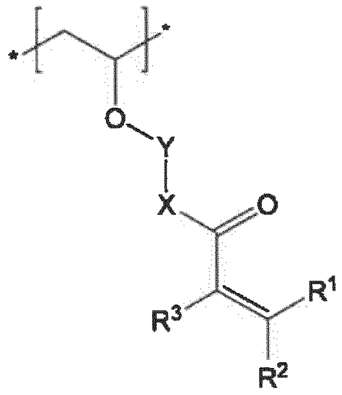

(I I)

where, in Formula (II), $R^1$, $R^2$, and $R^3$ are independently a hydrogen atom, a methyl group, a carboxyl group, or a carboxymethyl group, X is an oxygen atom or $-N(R^4)-$, $R^4$ is a hydrogen atom or a hydrocarbon group having 1 to 3 carbon atoms, Y is a divalent hydrocarbon group having 1 to 10 carbon atoms that may have a substituent, and * is an atomic bonding of the structural unit in the modified polyvinyl alcohol resin (A), or

[Chemical Formula 3]

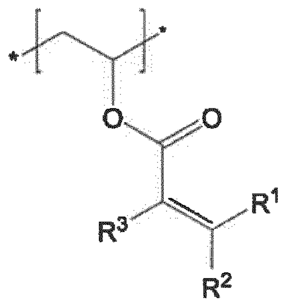

(I I I)

where, in Formula (III), $R^1$, $R^2$, and $R^3$ are independently a hydrogen atom, a methyl group, a carboxyl group, or a carboxymethyl group, and * is an atomic bonding of the structural unit in the modified polyvinyl alcohol resin (A).

4. The coating composition according to any of claims 1 to 3, wherein the modified polyvinyl alcohol resin (A) contains the partial structure represented by Formula (I) in a ratio of 0.2 to 5 mol%.

5. The coating composition according to any of claims 1 to 4, wherein the coating composition is used for providing a substrate with a physical property that is different from that of the substrate, and the substrate is composed of at least one type of material selected from the group consisting of resin, glass, and metal.

6. The coating composition according to any of claims 1 to 5, which is used as an anti-fog agent for providing a substrate with an anti-fog property.

7. The coating composition according to claim 6, wherein the substrate is a transparent support substrate.

8. The coating composition according to claim 6 or 7, wherein the modified polyvinyl alcohol resin (A) contains the partial structure represented by Formula (I) in a ratio of 0.2 to 5 mol%.

9. The coating composition according to any of claims 6 to 8, wherein the modified polyvinyl alcohol resin (A) has a number average molecular weight of 4,400 to 220,000.

10. An anti-fog member comprising a substrate and an anti-fog layer, wherein the anti-fog layer contains a cured product of the coating composition according to any of claims 6 to 9.

**11.** The anti-fog member according to claim 10,
wherein an average water absorption ratio of the cured product is 4 to 200-fold.

**12.** The coating composition according to any of claims 1 to 5, which is used as an anti-fouling agent for providing a substrate with an anti-fouling property.

**13.** The coating composition according to claim 12, wherein the modified polyvinyl alcohol resin (A) has a number average molecular weight of 4,400 to 220,000.

**14.** An anti-fouling member comprising a substrate and an anti-fouling layer, wherein the anti-fouling layer contains a cured product of the coating composition according to claim 12 or 13.

**15.** A method for producing an anti-fouling member, which comprises:

obtaining a pretreatment member having an uncured anti-fouling layer by applying the coating composition according to claim 12 or 13 onto a substrate; and
forming an anti-fouling layer by curing the uncured anti-fouling layer on the pretreatment member.

**16.** The method according to claim 15, wherein the step of forming the anti-fouling layer is performed by irradiating the uncured anti-fouling layer on the pretreatment member with ultraviolet rays or an electron beam.

**17.** The coating composition according to any of claims 1 to 5, which is used as a binder for inorganic particles for immobilizing inorganic particles (B1).

**18.** An inorganic particle-immobilized structure, wherein a cured product of the coating composition according to claim 17 is disposed between inorganic particles (B1).

**19.** The inorganic particle-immobilized structure according to claim 18, wherein the inorganic particles (B1) are silica particles or clay mineral particles.

**20.** The inorganic particle-immobilized structure according to claim 18, wherein the inorganic particles (B1) are layered silicate particles.

**21.** A laminate comprising a substrate and an inorganic particle-immobilized layer, wherein the inorganic particle-immobilized layer includes the inorganic particle-immobilized structure according to any of claims 18 to 20.

**22.** The laminate according to claim 21, which is a gas barrier member.

**23.** A package obtained by enclosing an object to be packaged in the laminate according to claim 22.

**24.** The coating composition according to any of claims 1 to 5, further comprising an anti-bacterial component (B2), wherein the coating composition being used as a resin composition for providing a substrate with an anti-bacterial property.

**25.** The coating composition according to claim 24, wherein the anti-bacterial component (B2) includes an ammonium salt-containing polymer.

**26.** The coating composition according to claim 24 or 25, wherein the anti-bacterial component (B2) includes at least one type of compound selected from the group consisting of chitosan and a neutralized product of chitosan.

**27.** The coating composition according to any of claims 24 to 26, wherein a mass ratio (A/B2) between the modified polyvinyl alcohol resin (A) and the anti-bacterial component (B2) is 99/1 to 40/60.

**28.** The coating composition according to any of claims 24 to 27, further comprising a cross-linking agent or a photopolymerization initiator.

**29.** A cured product of the coating composition according to any of claims 24 to 28.

**30.** A method for producing a cured product, which comprises:
applying energy to the coating composition according to any of claims 24 to 28 to cross-link the coating composition.

**31.** The method according to claim 30, wherein the step of applying energy is performed through heating or irradiation with active energy rays.

**32.** An anti-bacterial product comprising a substrate and an anti-bacterial layer, wherein the anti-bacterial layer contains the cured product of the coating composition according to claim 29.

[FIG.1]

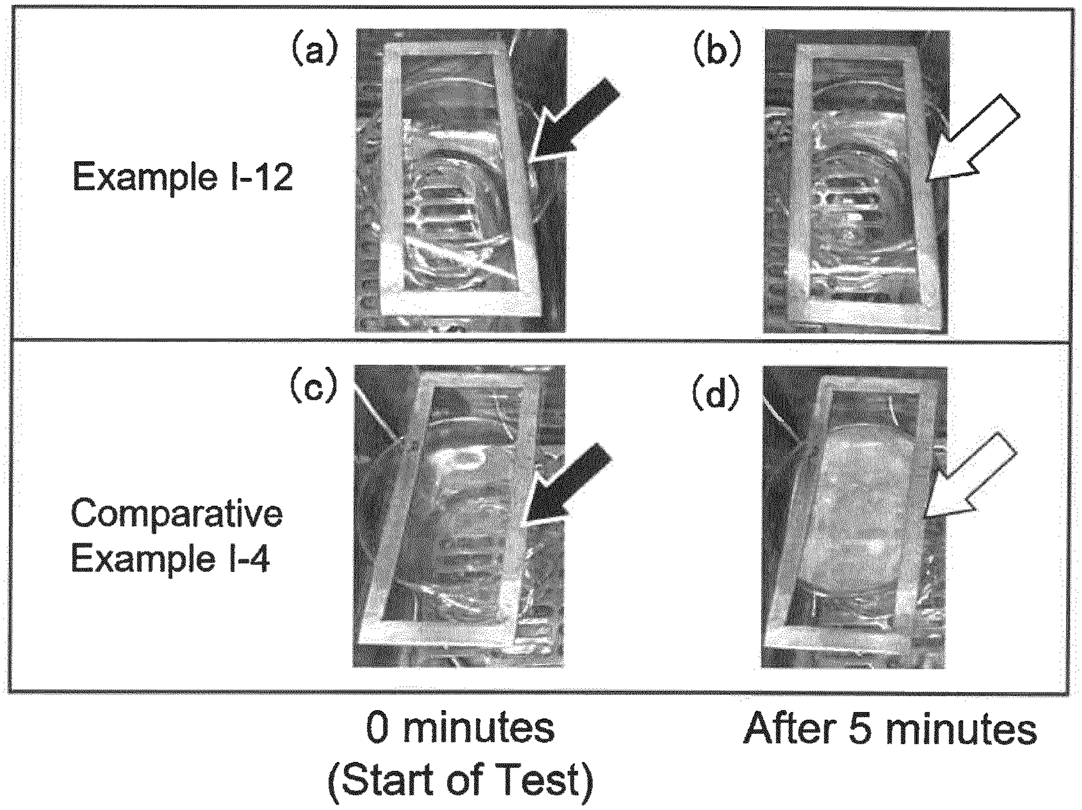
(a)
(b)
Example I-12
(c)
(d)
Comparative
Example I-4
0 minutes
(Start of Test)
After 5 minutes

## INTERNATIONAL SEARCH REPORT

International application No.
PCT/JP2020/017584

A. CLASSIFICATION OF SUBJECT MATTER
B32B 27/18(2006.01)i; B32B 27/30(2006.01)i; B65D 65/40(2006.01)i; C08F 8/14(2006.01)i; C08F 8/30(2006.01)i; C08F 16/06(2006.01)i; C08F 299/00(2006.01)i; C09D 5/16(2006.01)i; C08L 29/04(2006.01)i; C09D 129/04(2006.01)i; C09K 3/00(2006.01)i; C08K 3/34(2006.01)i; C08J 7/04(2020.01)i
FI: C09K3/00 R; C09D129/04; C08F16/06; C09D5/16; C08F8/30; C08L29/04 A; C08K3/34; B32B27/30 102; B32B27/18 Z; B65D65/40 D; C08J7/04 Z GER; C08J7/04 CEZ; C08F299/00; C08F8/14
According to International Patent Classification (IPC) or to both national classification and IPC

B. FIELDS SEARCHED
Minimum documentation searched (classification system followed by classification symbols)
B32B27/18; B32B27/30; B65D65/40; C08F8/14; C08F8/30; C08F16/06; C08F299/00; C09D5/16; C08L29/04; C09D129/04: C09K3/00: C08K3/34: C08J7/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-307763 A (TOHCELLO CO., LTD.) 25.12.2008 (2008-12-25) claim 3, paragraphs [0001]-[0003], [0011], [0015], [0021], [0033]-[0037] examples | 1-19, 21<br>20, 22-32 |
| Y<br>A | JP 2016-141793 A (DIC CORP.) 08.08.2016 (2016-08-08) paragraphs [0002]-[0003] | 20, 22-23<br>1-19, 21, 24-32 |
| Y<br>A | JP 2009-523890 A (HYDROMER, INC.) 25.06.2009 (2009-06-25) claim 6 | 24-32<br>1-23 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 July 2020 (17.07.2020) | 04 August 2020 (04.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/017584

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2003-171469 A (FUJIMORI KOGYO CO., LTD.) 20.06.2003 (2003-06-20) claim 5 | 24-32<br>1-23 |
| A | JP 59-179683 A (KURARAY CO., LTD.) 12.10.1984 (1984-10-12) claim 1 | 1-23 |

Form PCT/ISA/210 (continuation of second sheet) (January 2015)

**INTERNATIONAL SEARCH REPORT**

International application No.
PCT/JP2020/017584

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (January 2015)

INTERNATIONAL SEARCH REPORT

International application No. PCT/JP2020/017584

<Continuation of Box No. III>

Document 1: JP 2008-307763 A (TOHCELLO CO., LTD.) 25.12.2008 (2008-12-25) claim 3, paragraphs [0001]-[0003], [0011], [0015], [0021], [0033]-[0037] examples

Claims are classified into the following four inventions.

(Invention 1) Claims 1-5 and 12-16

Document 1 sets forth a "coating composition containing a modified polyvinyl alcohol resin (A) having an ethylene unsaturated group at a side chain," and also sets forth having a configuration of the invention in claims 2-5 and 12-16. Claims 1-5 and 12-16 lack novelty in light of document 1, and thus, do not have a special technical feature.

Therefore, claims 1-5 and 12-16 are classified as invention 1.

(Invention 2) Claims 6-11

It cannot be said that claims 6-11 have technical features identical or corresponding to those of claims 1-5 and 12-16 classified as invention 1.

In addition, claims 6-11 are dependent claims on claims 1-5 classified as invention 1, but "to provide antifogging properties for a substrate," which is the specific problem to be solved by the invention as understood from the technical feature added to claims 1-5, has little relevance to the problem to be solved by claims 1-5 and 12-16 of a "coating composition which can be used for various substrates or matrices," "to provide antifouling properties for the substrate." Accordingly, claims 6-11 are not recognized to be inventively associated with claims 1-5 and 12-16.

Furthermore, claims 6-11 are not substantially identical or equivalent to any of the claims classified as invention 1.

Thus, claims 6-11 cannot be classified as invention 1.

In addition, claims 6-11 have the special technical feature of a "coating composition which contains a modified polyvinyl alcohol resin (A) having an ethylene unsaturated group at a side chain and is used as an anti-fogging agent to provide antifogging properties for the substrate," and thus are classified as invention 2.

(Invention 3) Claims 17-23

It cannot be said that claims 17-23 have technical features identical or corresponding to those of claims 1-5 and 12-16 classified as invention 1 or claims 6-11 classified as invention 2.

In addition, claims 17-23 are dependent on claims 1-5 classified as invention 1, but "to provide a binder for inorganic particles to fix inorganic particles (B1)," which is the specific problem to be solved by the invention as understood from the technical feature added to claims 1-5, has little relevance to the problem to be solved by claims 1-5 and 12-16 of a "coating composition which can be used for various substrates or matrices," "to provide antifouling properties for the substrate." Accordingly, claims 17-23 are not recognized to be inventively associated with claims 1-5 and 12-16.

Furthermore, claims 17-23 are not substantially identical or equivalent to any of the claims classified as invention 1 or 2.

Thus, claims 17-23 cannot be classified as either invention 1 or invention 2.

Form PCT/ISA/210 (extra sheet) (January 2015)

**INTERNATIONAL SEARCH REPORT**

International application No.
PCT/JP2020/017584

In addition, claims 17-23 have the special technical feature of a "coating composition which contains a modified polyvinyl alcohol resin (A) having an ethylene unsaturated group at a side chain and is used as a binder for inorganic particles to fix inorganic particles (B1)," and thus are classified as invention 3.

(Invention 4) Claims 24-32

It cannot be said that claims 24-32 have technical features identical or corresponding to those of claims 1-5 and 12-16 classified as invention 1 or claims 6-11 classified as invention 2.

In addition, claims 24-32 are dependent on claims 1-5 classified as invention 1, but "to provide antibacterial properties for the substrate," which is the specific problem to be solved by the invention as understood from the technical feature added to claims 1-5, has little relevance to the problem to be solved by claims 1-5 and 12-16 of a "coating composition which can be used for various substrates or matrices," "to provide antifouling properties for the substrate." Accordingly, claims 24-32 are not recognized to be inventively associated with claims 1-5 and 12-16.

Moreover, claims 24-32 are not substantially identical or equivalent to any of the claims classified as inventions 1-3.

Therefore, claims 24-32 cannot be classified as any of inventions 1-3.

In addition, claims 24-32 have the special technical feature of a "coating composition which contains an antibacterial component (B), is used as a resin composition to provide antibacterial properties for the substrate, and contains a modified polyvinyl alcohol resin (A) having an ethylene unsaturated group at a side chain," and thus are classified as invention 4.

**INTERNATIONAL SEARCH REPORT**
Information on patent family members

International application No.
PCT/JP2020/017584

| Patent Documents referred in the Report | Publication Date | Patent Family | Publication Date |
|---|---|---|---|
| JP 2008-307763 A | 25 Dec. 2008 | (Family: none) | |
| JP 2016-141793 A | 08 Aug. 2016 | (Family: none) | |
| JP 2009-523890 A | 25 Jun. 2009 | US 2007/0166344 A1 claim 6<br>WO 2007/084452 A2<br>EP 1984121 A2<br>CA 2636975 A1<br>KR 2008-0110578 A<br>NO 20083155 L<br>CN 101374607 A<br>BR PI0706622 A2<br>AU 2007207708 A1<br>MX 2008009326 A<br>TW 200738133 A<br>AU 2013245551 A1 | |
| JP 2003-171469 A | 20 Jun. 2003 | (Family: none) | |
| JP 59-179683 A | 12 Oct. 1984 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014101439 A
- JP 2016002758 A
- JP 2015182401 A
- JP 2014095059 A
- JP 2018083802 A
- JP 2019084760 A
- JP 2019084761 A
- JP 2019093295 A
- JP 2019115894 A


### Non-patent literature cited in the description


- *Carbohydrate Polymers,* 2018, vol. 198, 241-248
- *Polymer Preprints, Japan,* 2018, vol. 67 (1), 2Pc045